# EUROPEAN PATENT APPLICATION

(11) **EP 2 169 253 A1**
(43) Date of publication of application: **31.03.2010**
(21) Application number: 09169886.0
(22) Date of filing: 10.09.2009
(51) Int. Cl.: F16D 55/22

(54) **Oil hole sealing plug structure and opposed piston type disc brake**

(30) Priority: 26.09.2008 JP 2008247065; 26.09.2008 JP 2008247066
(71) Applicant: Akebono Brake Industry Co., Ltd., Tokyo 103-8534 (JP)
(72) Inventor: Negishi, Toshiyuki, Chuo-ku Tokyo (JP); Ichige, Takayuki, Chuo-ku Tokyo (JP); Noguchi, Tetsuya, Chuo-ku Tokyo (JP)
(74) Representative: Grünecker, Kinkeldey, Stockmair & Schwanhäusser Anwaltssozietät

(57) **Abstract**

An oil hole sealing plug structure is provided with a large diameter portion (44) and a small diameter portion (43) respectively formed in an oil hole (20b), and a plug (48) provided on an inside of the large diameter portion (44).

One end face (60) of the plug (48) is pressed against a seal surface (45) formed in a continuous portion between the large diameter portion (44) and the small diameter portion (43) to thereby liquid-tightly close a portion of the oil hole (20b).

A pressing member (47) is fixed to the inside of the large diameter portion (44). A pressing portion (49) formed in one end face of the pressing member (47) is pressed against a plane-shaped pressure receiving portion (59) formed in the other end face of the plug (48).

## Description

### BACKGROUND OF THE INVENTION

### <FIELD OF THE INVENTION>

The present invention relates to an improvement in a sealing plug structure for closing a portion of an oil hole formed in order to constitute an oil passage to be formed in a part (oil pressure part) using oil pressure to thereby maintain a pressure of an oil within the oil hole at a proper level. For example, the invention relates to an improvement in the sealing plug structure of a caliper of an opposed piston type disc brake, which is one of disc brakes used in a vehicle for braking, structured such that two pistons are opposed to each other on both sides of a rotor.

Also, the invention relates to an improvement in an opposed piston type disc brake structured such that two pistons are opposed to each other on both sides of a rotor.

### <BACKGROUND ART>

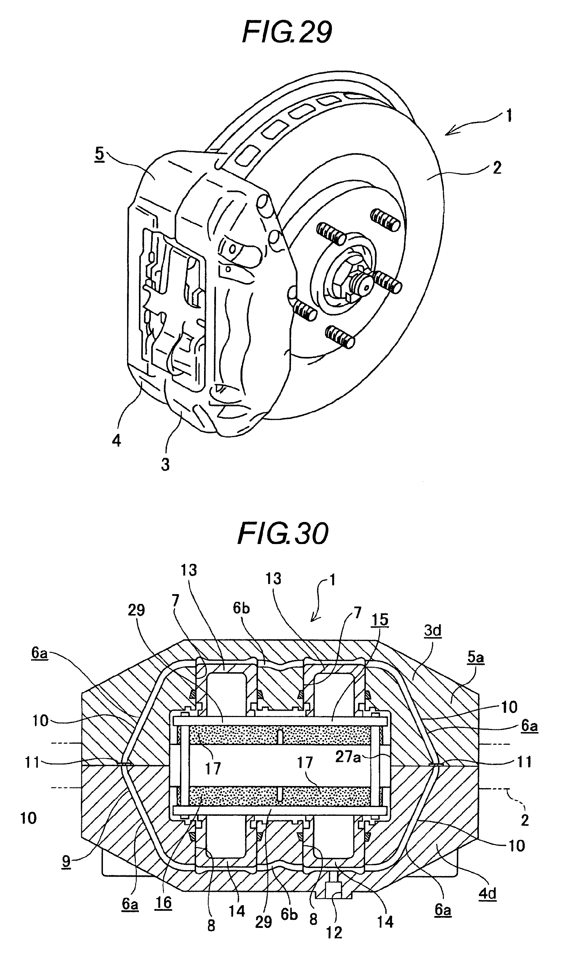

In order to brake a vehicle, there is widely used a disc brake. When braking the vehicle using the disc brake, a pair of pads, which are disposed on both sides in an axial direction of a rotor rotatable together with a wheel, are pressed against two side surfaces of the rotor. As this type of disc brake, conventionally, there are known disc brakes of various structures. Among them, there has been increased the use of an opposed piston type disc brake structured such that two pistons are opposed to each other, because it can provide a stable braking force. For example, Fig. 29 shows a first example of a conventional structure of an opposed piston type disc brake disclosed in the patent reference 1 (JP-U-05-027364). This opposed piston type disc brake 1 has the following structure. That is, a caliper 5 including an outer body portion 3 and an inner body portion 4 is provided in a position interposing a rotor 2 therebetween, and an outer cylinder and an inner cylinder are respectively provided within the body portions 3 and 4 in such a manner that their respective openings are opposed to each other through the rotor 2. Into the outer and inner cylinders, there are respectively inserted outer and inner pistons in such a manner that they are liquid-tight and can move in an axial direction of the rotor 2. An outer pad is supported on the outer body portion 3 and an inner pad is supported on the inner body portion 4 in such a manner that they can move in the axial direction of the rotor 2.

In braking, pressure oil is fed into the outer and inner cylinders and, using the outer and inner pistons, the outer and inner pad are respectively pressed against outer and inner side surfaces of the rotor 2. According to the structure disclosed in the patent reference 1 shown in Fig. 29, the outer body portion 3 and inner body portion 4, which are formed separately from each other, are connected together usingmultiple connecting bolts, thereby producing the caliper 5. However, it takes time and labor to connect the outer and inner body portions 3 and 4 together using the multiple connecting bolts in this manner.

Fig. 30 shows a second example of a conventional structure disclosed in the patent reference 2 (JP-A-2002-227886). In an opposed piston type disc brake 1 shown in Fig. 30, an outer body portion 3d and an inner body portion 4d, which are formed separately from each other, are connected together using a connecting bolt (not shown) to thereby produce a caliper 5a. Also, in the disc brake 1 shown in Fig. 30, multiple pipes 6a, 6b are inserted into the two body portions 3d and 4d to thereby constitute an oil passage which is used to supply pressure oil into outer cylinders 7, 7 and inner cylinders 8, 8 and discharge the pressure oil from these cylinders. That is, into each of the two end portions of the rotor 2 in the peripheral direction thereof (in Fig. 30, in the right and left direction), there are inserted a pair of pipes 6a and 6a in such a manner that they are bent in part. And, in the connecting portions of the one-side end portions of inclined portions 10, 10 which are inclined with respect to the axial direction of the rotor 2, there are provided liquid sealing seals 11, 11.

Also, the outer cylinders 7 and 7 are allowed to communicate with each other by their associated pipe 6b inserted into the body portion 3d, while inner cylinders 8 and 8 are allowed to communicate with each other by their associated another pipe 6b inserted into the body portion 4d. The other end of a feed/discharge port 12 having one end opened on the side surface of the inner body portion 4d, is allowed to communicate with one of the inner cylinders 8. In braking, the pressure oil is fed into the respective cylinders 7, 8 through the feed/discharge port 12 and oil passage 9. As the pressure oil is fed, outer and inner pistons 13 and 14, which are respectively mounted into the outer and inner cylinders 7 and 8, are pushed out; and, the pistons 13 14 press linings 17, 17 respectively constituting outer and inner pads 15 and 16 against the two side surfaces of the rotor 2. Although not shown, the patent reference 3 (JP-B2-2861217) also discloses an opposed piston type disc brake having a similar structure to the structures shown in the above-mentioned figures 29 and 30, in which outer and inner body portions are connected together using a connecting bolt to thereby produce a caliper. The patent reference 4 (JP-U-57-075238) also discloses an opposed piston type disc brake structured such that a pair of intermediate members are interposed between outer and inner body portions, and these two body portions and intermediate members are connected together using multiple connecting bolts.

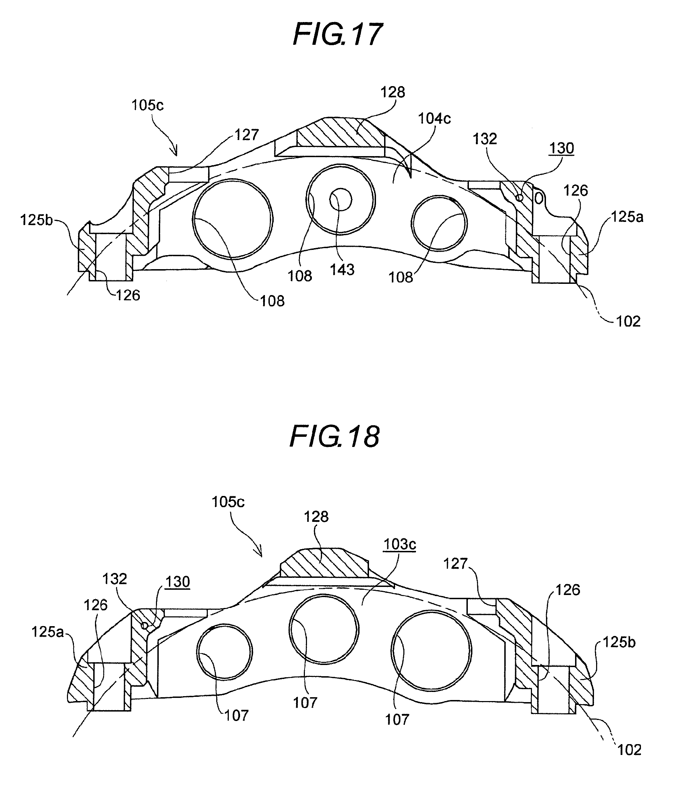

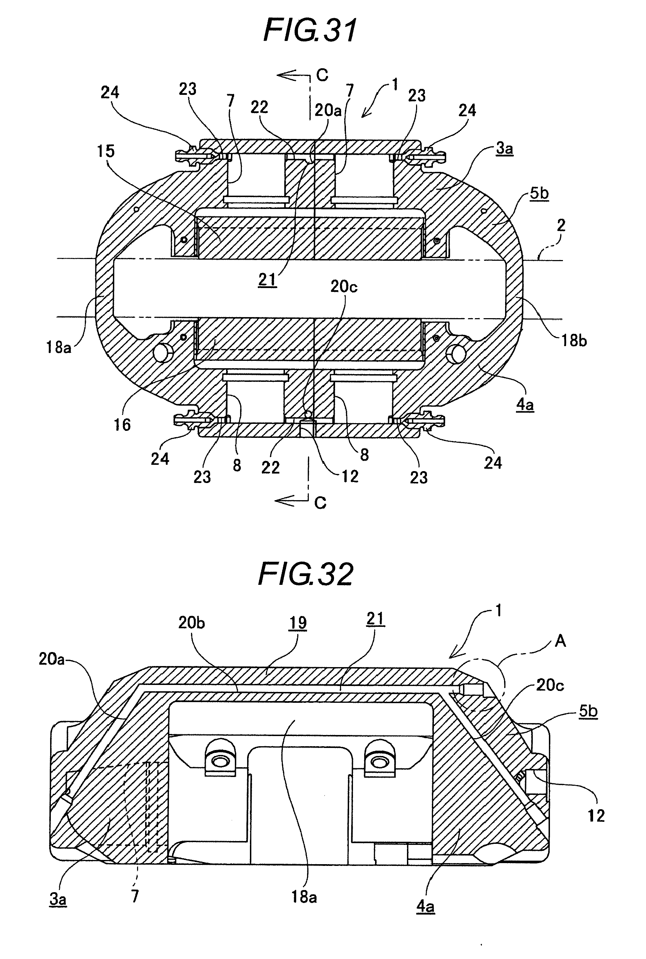

On the other hand, as disclosed in the patent reference 5 (US 2004/0216967) and patent reference 6 (JP-A-06-074266), conventionally, there is also known an opposed piston type disc brake having a structure in which outer and inner body portions are formed as an integral body (are formed integrally with each other). For example, Figs. 31 and 32 respectively show a third example of the conventional structure of a disc brake disclosed in the patent reference 5. This disc brake 1 includes a caliper 5b in which an outer body portion 3a and inner body portion 4a are formed as an integral body. In the caliper 5b, the two body portions 3a and 4a are connected together by a pair of connecting portions 18a respectively provided on the two end portions of a rotor 2 in the peripheral direction thereof (in Fig. 17, in the right and left direction; and, in Fig. 18, in the front and back direction), and an intermediate rib 19 provided in the central portion of the rotor 2 in the peripheral direction thereof. Also, the caliper 5b includes an oil passage 21 including three linear-shaped oil holes 20a to 20c formed in the central portion of the caliper 5b including the intermediate rib 19 in the peripheral direction of the rotor 2. Of these three linear-shaped oil holes 20a to 20c, a pair of linear-shaped oil holes 20a and 20c respectively situated on two sides have one-side ends in communication with the intermediate portions of second linear-shaped oil holes 22 and 22 respectively for allowing communication between a pair of outer cylinders 7, 7 and communication between a pair of inner cylinders 8, 8. Also, the other end of a feed/discharge port 12, one end of which is opened in the side surface of the inner body portion 4b, is allowed to communicate with the intermediate portion of the second linear-shaped oil hole formed in the inside of the inner body portion 4b. When mounting the caliper 5b onto a vehicle, the caliper 5b is mounted on the rear or front side of a wheel in order that the respective linear-shaped oil holes 20a to 20c can be disposed in the horizontal direction. Also, in an opposed piston type disc brake disclosed in the patent reference 6, a pipe is inserted into the rotor peripheral direction one end portion of a caliper including outer and inner body portions formed as an integral body, and the pipe is used to allow inner and outer cylinders to communicate with each other.

In the opposed piston type disc brake disclosed in the patent reference 1 to 4 as shown in the above-mentioned figures 29 and 30, since the outer body portions 3, 3a and inner body portions 4, 4a are connected together using the connecting bolts, it takes time and labor to assemble the disc brake. In the second example of the conventional structure disclosed in the patent reference 2 shown in Fig. 30, there is found a problem that the temperature of the pressure oil serving as brake oil is easy to rise. That is, in the structure shown in Fig. 30, the oil passage 9 formed in the inside of the caliper 5a includes, in its rotor 2 peripheral direction two end portions, the paired inclined portions 10 and 10 respectively inclined with respect to the axial direction (in Fig. 30, in the vertical direction) of the rotor 2. And, the one-end portions of the two inclined portions 10 and 10 are connected together in central portion of the caliper 5a with respect to the axial direction of the rotor 2. Therefore, the length of such portion of the caliper 5a that exists in the portion extending over the outer periphery of the rotor 2 is longer by an amount corresponding to the inclination of the two inclined portions 10, 10 with respect to the axial direction of the rotor 2. On the other hand, since the rotor 2 generates heat due to its friction with the respective pads 15, 16 in braking, the temperature of such portion of the caliper 5a as extends over the outer periphery of the rotor 2 is raised greatly. As a result of this, like the structure shown in the above-mentioned figure 30, when the length of such portion of the oil passage 9 as exists in the portion extending over the outer periphery of the rotor 2 is large (long), the temperature of the pressure oil within the caliper 5a is easy to rise.

On the other hand, in the disc brake having the conventional structure disclosed in the patent reference 5 and 6 shown in the above-mentioned figures 31 and 32, employment of the caliper 5b including the integrally formed outer body portion 3a and inner body portion 4a eliminates the need for time and labor for connecting together these two body portions 3a and 4a.
Thus, when compared with the structures respectively disclosed in the before-mentioned patent reference 1 to 4, the structure of the patent reference 5 has an advantage in the assembling operation efficiency. However, in the third example of the conventional structure disclosed in the patent reference 5 shown in Figs. 31 and 32, when the oil passage 21, the second linear-shaped oil holes 22, 22 and cylinders 7, 8 are filled with the brake oil, the air is easy to remain within the caliper 5b, resulting in the poor air bleeding performance.

That is, in the third example of the conventional structure shown in Figs. 31 and 32, of the outer and inner body portions 3a and 4a, the end portion openings of the third linear-shaped oil holes 23 and 23 communicating with the outer and inner cylinders 7 and 8 are closed by bleeder screws 24, 24 respectively. After the disc brake is mounted onto a vehicle, when the oil passage 21 and cylinders 7, 8 are filled with the brake oil, in order to prevent the air from remaining within the caliper 5b, the air is bled using the bleeder screws 24, 24. In this air bleeding operation, in a state where a tube is connected to any one of the bleeder screws 24, 24, the operation and non-operation of a brake pedal as well as the loosening and tightening of the bleeder screws 24, 24 are carried out repeatedly, whereby the brake oil mixed with the air is discharged from within the caliper 5b to the outside through the tube. However, in the third example of the conventional structure shown in Figs. 31 and 32, in a state where the caliper 5b is mounted on the vehicle, the three linear-shaped oil holes 20a to 20c of the caliper 5b, which are respectively situated in the rotor 2 peripheral direction central portion of the caliper 5b, are all situated in the horizontal direction. Due to this, the air is easy to remain within these linear-shaped oil holes 20a to 20c. In order to eliminate the residual air within the caliper 5b completely, the number of times of air bleeding must be increased. However, an increase in the number of times of air bleeding increases the time and labor of an operator, which results in an increase in the time necessary to feed the brake oil after the disc brake is mounted.

Also, in the structure shown in Figs. 31 and 32, to form the three linear-shaped oil holes 20a to 20c constituting the oil passage 21, it is necessary to execute a hole making operation on the caliper 5b using a working tool such as a drill or a reamer. When such hole making operation is executed on the caliper 5b, one-side ends of the respective linear-shaped oil holes 20a to 20c are opened in the outer surface of the caliper 5b. Thus, it is necessary to mount sealing plugs which can airtightly and liquid-tightly close these openings of one-side ends of the respective linear-shaped oil holes 20a to 20c.

Conventionally, there has been known a technology in which, as the sealing plugs for closing such openings of one-side ends of the respective linear-shaped oil holes 20a to 20c, there are used sealing plugs each having the same structure of a sealing plug used to close the inside of a gas intake port formed in a container for filling high-pressure gas.

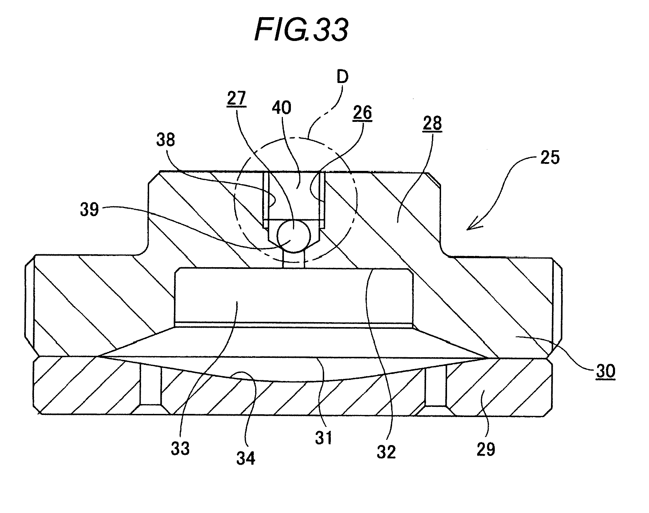

Fig. 33 shows, of such sealing plugs, a sealing plug 27 for closing the gas intake port 26 of a high pressure accumulator 25 disclosed in the patent reference 7 (JP-A-11-280904). The high pressure accumulator 25 includes a container 30 produced by connecting together a case 28 and a plate 29 as an integral body, and a diaphragm 31 supported on the inside of the container 30. A first recessed portion 32 formed in the case 28 and the above-mentioned diaphragm 31 cooperate together in constituting a high pressure chamber 33 for filling high pressure gas such as nitrogen. In the portion that exists in the inside of the plate 29 and is disposed on the opposite side to the high pressure chamber 330 with respect to the diaphragm 31, there is formed a second recessedportion 34. The second recessed portion 34 is formed such that its bottom portion communicates with a delivery passage for feeding fuel from a high pressure fuel pump (not shown) to a delivery pipe.

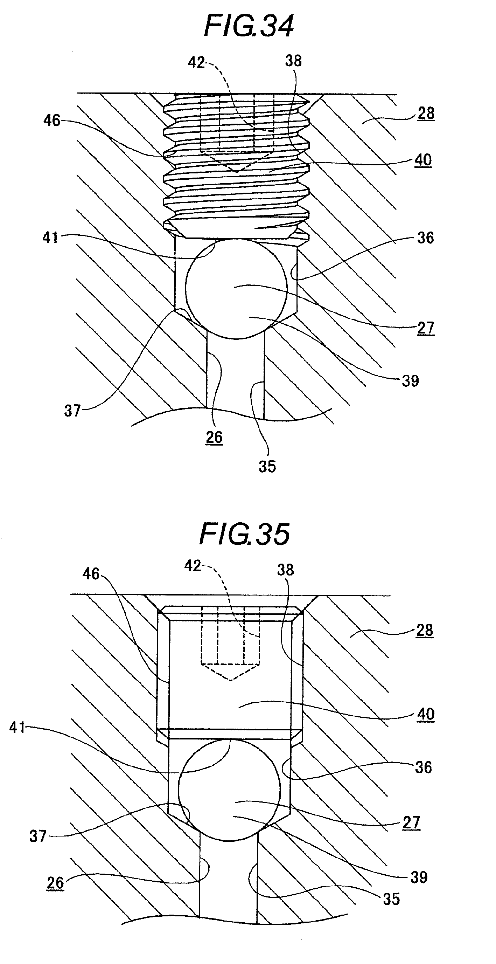

In the bottom portion of the first recessed portion 32 formed in the case 28, there is opened one end of the gas intake port 26, while the inside of the gas intake port 26 is closed by the sealing plug 27. This sealing plug 27, similarly to a structure shown in Fig. 34, includes the gas intake port 26 as well as a steel ball 39 corresponding to the plug and a screwmember 40 corresponding to a pressing member respectively provided in the inside of the gas intake port 26. The gas intake port 26 includes a small diameter portion 35, a large diameter portion 36 formed larger in diameter than the small diameter portion 35, and a tapered surface 37 formed in a continuous portion interposed between the small and large diameter portions 35 and 36. Also, on the outer end side (in Figs. 33 and 34, on the upper end side) of the large diameter portion 36 that is near to the opening, there is formed a female screw portion 38; and, when a male screw portion 46 formed on the outer peripheral surface of the screw member 40 is threadedly engaged with the female screw portion 38 and is tightened further thereon, the screw member 40 can be connected and fixed to the female screw portion 38. This screw member 40 is formed as a rod-like member having no large-diameter head portion. A pressing member 41 formed in one end face (in Figs. 33 and 34, the lower end face) of the screw member 40 is pressed against the steel ball 39, and the steel ball 39 is pressed against the tapered surface 37. As a result of this, the steel ball 39 and tapered surface 37 are sealed with respect to each other. Here, in the example shown in these figures, to connect and fix the male screw portion 46 of the screw member 40 to the female screw portion 38, in the other end face (in Figs. 33 and 34, the upper end face) of the screw member 40, there is formed a securing hole 42 the section of which is hexagonal.

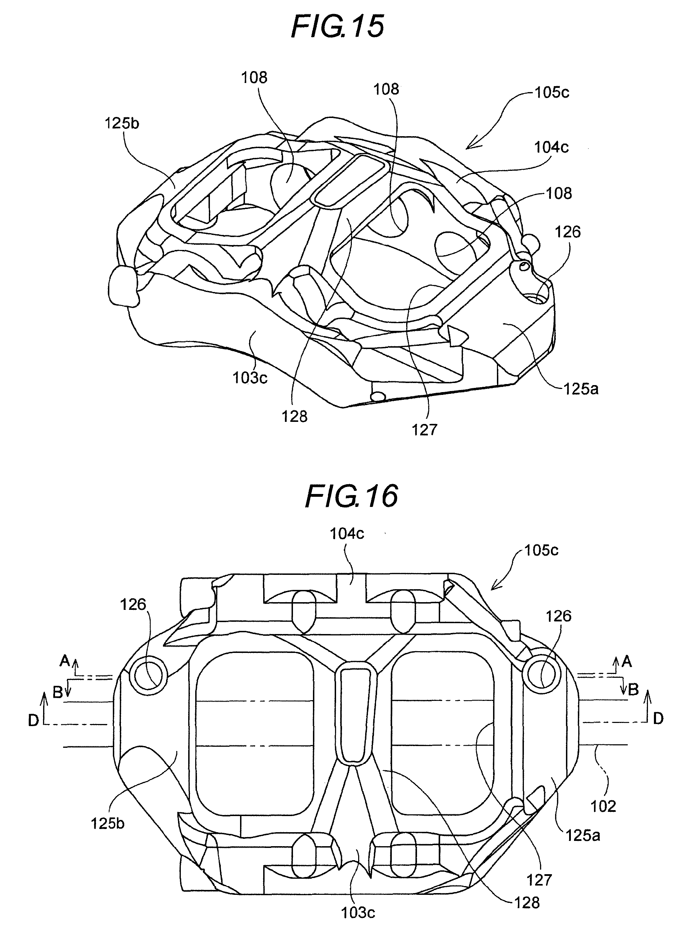

According to the sealing plug structure of the high pressure accumulator 25 shown in Figs. 33 and 34, the outer end side opening of the gas intake port 26 can be sealed. Also, as shown in Fig. 35, conventionally, there is also known a structure in which, in a state where the other end face (in Fig. 35, the upper end face) of the screw member 40 has been moved from the end edge of the outer end opening of the gas intake port 26 to the inner end side (in Fig. 35, the lower end side) thereof, the steel ball 39 is pressed against the tapered surface 37. And, there is further known conventionally a technology in which a structure similar to the structure of the sealing plug 27 shown in Figs. 33 to 35 for closing the gas intake port 26 of the high pressure accumulator 25 is used in the portion for closing the one-end side openings of the linear-shaped oil holes 20a to 20c serving as the oil holes of the caliper 5b for use in the disc brake shown in Figs. 16 and 17.

However, in any one of the sealing plug structures shown in Figs. 34 and 35, the spherical surface portion of the steel ball 39 is pressed using a flat-surface-shaped pressing portion 41 formed in the one end face of the screw member 40 to thereby press the steel ball 39 against the tapered surface 37. For this reason, when any one of the structures shown in Figs. 34 and 35 is used in the portion for closing the one-end side portions of the linear-shaped oil holes 20a to 20c (Figs. 31 and 32) formed in the caliper 5b, the degree of distortion generated on the steel ball 39 is increased due to variations in the pressure oil existing within the linear-shaped oil holes 20a to 20c. That is, since the contact portion between the spherical surface portion of the steel ball 39 and the pressing portion 41 of the screw member 40 provides a single and point contact portion, the maximum distortion generated on the steel ball 39 is caused to increase with respect variations in an axial force applied to the steel ball 39 and screw member 40, whereby the steel ball 39 is easy to produce primary deformation (elastic deformation) which can lead to the collapse (permanent deformation) of the steel ball 39. In the case where the amount of the elastic deformation of the steel ball 39 becomes large, when, in the disc brake 1, the pressure oil is fed through the feed/discharge port 12 (see Figs. 31 and 32) into the caliper 5b in order to push the pistons out of the cylinders 7 and 8, the feed amount of the pressure oil for generation of a given level of liquid pressure increases when compared with a case where the steel ball 39 is assumed that it cannot be deformed at all (that is, the amount of loss of the liquid increases). Also, when the distortion of the steel ball 39 becomes excessively large, there is a possibility that the steel ball 39 can be collapsed (can be plastically deformed) to thereby be unable to effectively secure the sealing state between the steel ball 39 and tapered surface 37 for a long period of time.

Also, when closing the end portions of the linear-shaped oil holes 20a to 20c using the steel ball 39, the axial length of the whole of the sealing plug structure constituted by the spherical-shaped steel ball 39 and screw member 40 increases. Such increase in the axial length results in an increase in the lengths of the linear-shaped oil holes 20a to 20c, which, unfavorably, can increase the size of the whole of the caliper 5b (see Figs. 31 and 32) and also can increase the weight of the caliper 5b greatly.

Here, as the prior art technical reference relating to the invention, other than the patent reference 1 to 7, there are further available the patent reference 8 (JP-U-57-153827) and the patent reference 9 (JP-A-57-015131).

### SUMMARY OF THE INVENTION

An oil hole sealing plug structure according to the invention,in view of the above-mentioned prior art circumstances, aims not only to be able to reduce the size and weight of a member with an oil hole formed therein but also, even when the pressure of pressure oil flowing through an oil hole varies, to be able to sufficiently reduce the amount of deformation of a plug for closing a portion of the oil hole.

Also, an opposed piston disc brake according to the invention, in view of the above-mentioned prior art circumstances, aims to be able to prevent an increase in the temperature of pressure oil and enhance the air bleeding performance owing to employment of a structure where the outer and inner body portions of a caliper are formed as an integral body.

According to one or more embodiments of the invention, an oil hole sealing plug structure is provided with: a large diameter portion and a small diameter portion respectively formed in an oil hole; and a plug provided on the inside of the large diameter portion, wherein one end face of the plug is pressed against a seal surface formed in a continuous portion between the large and small diameter portions to thereby liquid-tightly close a portion of the oil hole.
In an oil hole sealing plug structure according to a first aspect of the invention, a pressing member is fixed to the inside of the large diameter portion, and a pressing portion formed in one end face of the pressing member is pressed against a plane-shaped pressure receiving portion formed in the other end face of the plug.
Here, the above-mentioned expression "seal surface" includes not only the surface portion of a seal surface but also the corner portions (edge portions) of the seal surface. That is, the invention also includes a case where one end face of the plug is pressed against only the corner portions (edge portions) of the seal surface (this applies similarly to the whole of the present specification and appended claims thereof).

Also, in an oil hole sealing plug structure according to a fourth aspect of the invention, a male screw portion formed in the outer peripheral surface of the plug integrally therewith is threadedly engaged and firmly tightened on a female screw portion formed in the large diameter portion to thereby fix the plug to the inside of the large diameter portion.

Also, according to a second aspect of the invention, in the structure according to the first aspect of the invention, preferably, the outer surface of the plug may include a partial spherical surface portion having a portion of a spherical surface and a plane-shaped pressure receiving portion.

Also according to a third aspect of the invention, more preferably, the pressing member may be made of a screw member and the male portion of the screw member may be threadedly engaged with and firmly tightened on the female screw portion of the large diameter portion, whereby a pressing portion formed in the screw member may be pressed against the plane-shaped pressure receiving portion of the plug.

Also, according to a fifth aspect of the invention, in the structure according to the first to fourth aspects of the invention, preferably, the plug may include a curved surface portion formed in the portion thereof that is opposed to the seal surface, and the curved surface portion may have a shape which can be obtained when a curved line is rotated about the center axis of the plug.

With use of the above-structured oil hole sealing plug structure according to one or more embodiments of the invention, there can be provided a structure which not only can reduce the size and weight of a member with an oil hole formed therein but also, even when the pressure of pressure oil flowing through the oil hole varies, can sufficiently reduce the amount of deformation of the plug for closing a portion of the oil hole.
That is, in the structure according to the first aspect of the invention, the pressing portion formed in one end face of the pressing member fixed to the large diameter portion of the oil hole is pressed against the plane-shaped pressure receiving portion formed in the other end face of the plug. This structure can increase the number of contact portions between the pressing member and plug, whereby the surface pressure acting on the contact portions can be reduced. Therefore, even when an axial force is applied to the plug for closing a portion of the oil hole due to variations in the pressure of the pressure oil flowing through the oil hole, the amount of elastic deformation of the plug can be reduced sufficiently. As a result of this, for example, when the invention is applied to such portion of the caliper for a disc brake as closes the end portion of a linear-shaped oil hole constituting an oil passage for feeding the pressure oil to the cylinder of the caliper, an increase in the feeding amount of the pressure oil (an increase in the loss liquid amount) into the caliper for generating a given level of oil pressure can be reduced sufficiently. Also, since the crash of the plug can be prevented effectively regardless of the axial force applied to the plug, effective sealing performance between the plug and seal surface can be secured for a long period of time. Also, when compared with a structure in which such portion of the plug as is pressed against the pressing member is formed to have a spherical surface shape, the axial direction length of the plug can be shortened. This can also shorten the length of the oil hole, thereby being able to facilitate the reduction in the size and weight of a member in which such oil hole is formed.

Also, in the structure according to the fourth aspect of the invention, the male screw portion formed integrally in the outer peripheral surface of the plug is threadedly engaged with and firmly tightened on the female screw portion formed in the large diameter portion, thereby fixing the plug to the inside of the large diameter portion. This can eliminate the need to fix a member, which is formed separately from the plug, to the large diameter portion and further press the separate member to the plug, thereby being able to reduce the number of parts. Also, there is eliminated the need to develop (a structure for) the manner of transmission of the axial force between the plug and separate member; and thus, even when the axial force is applied to the plug for closing a portion of the oil hole due to variations in the pressure of the pressure oil flowing through the oil hole, the elastic deformation amount of the plug can be reduced sufficiently. Further, although, in the plug, there are formed the male screw portion to be fixed to the large diameter portion and the portion to be pressed against the seal surface, the whole length of the plug can be shortened; and, therefore, the length of the oil hole can be shortened, which makes it possible to facilitate the reduction in the size and weight of a member in which this oil hole is formed.

Also, in the structure according to the second aspect of the invention, the plug can be structured by shaving a portion of a spherical member such as a steel ball, thereby being able to facilitate the production of the plug.

Also, in the structure according to the third aspect of the invention, it is easy to carry out the operation to connect the pressing member to the oil hole. And, by changing the tightening torque for connecting the male screw portion of the pressing member to the female screw portion, the distortion amount of the plug can be changed easily. This can facilitate the management of the sealing state between the plug and seal surface. On the other hand, when the sealing plug structure shown in Figs. 34 and 35 is used in the portion to close the oil hole, the screw member and steel ball can be point contacted with each other only in one portion, whereby, as an axial force generated in the steel ball increases, the area of the contact portion is varied microscopically greatly. In this case, the relationship between the axial direction distortion amount generated in the steel ball and the tightening amount (tightening rotation angle) of the screw member does not provide a linear proportion relationship, but the design setting of the tightening torque of the screw member for properly maintaining the pressure of the pressure oil within the oil hole is greatly influenced by the difference between the materials and shapes of the steel ball and screw member, so that it is varied greatly. According to the structure as set forth in Claim 3, since the contact portion between the pressing member and plug can be made as a plane and also the pressing member is the screw member, the relationship between the tightening amount (tightening rotation angle) of the screw member with respect to the female screw portion and the amount of distortion generated in the plug in the axial direction is allowed to provide a linear proportion relationship, whereby the management of the sealing state can be carried out easily by adjusting the tightening rotation angle. Also, when the screwmember and plug are made of different materials, it is necessary to take it into account a reduction in the axial force caused by the difference in the heat expansion between the two members due to variations in the temperature. However, in the structure according to the third aspect of the invention, since the axial direction length of the plug can be shortened, the plug is hard to contract regardless of variations in the temperature when the plug is in use, whereby the axial force applied to the plug and screw member can be prevented from lowering excessively.

Also, with use of the structure according to the fifth aspect of the invention, when, in mounting the plug, the plug is rotated inside the large diameter portion, the lowered sealing performance in the end portion of the oil hole can be prevented effectively. Also, when mounting the plug to the inside of the large diameter portion, there is eliminated the need to regulate the phase of the plug in the rotation direction thereof, thereby being able to facilitate the plug mounting operation.

Moreover, according to one or more embodiments of the invention, an opposed piston type disc brake is provided with: a caliper including integrally formed outer and inner body portions respectively disposed with a rotor rotatable together with a wheel between them; outer and inner cylinders respectively provided in their associated body portions in such a manner that they are opposed to each other; pistons respectively inserted into their associated cylinders in such a manner that they can be shifted in the axial direction of the rotor; and, a pair of pads respectively supported on the caliper in such a manner that they can be shifted in such axial direction. Also, in the caliper, the peripheral direction two end portions of the respective body portions are connected together by a pair of connecting portions.

According to a sixth aspect of the invention, an opposed piston type disc brake is structured such that, of the pair of connecting portions of the caliper, in such portion of the caliper including one connecting portion as provides the lower side of the caliper in a state where the caliper is mounted on a vehicle, there is formed an oil passage for allowing communication between the outer cylinders as well as communication between the inner cylinders. This oil passage includes a linear-shaped oil hole formed parallel to the axial direction of the rotor and having a length equal to or larger than the width of an opening formed outside in the diameter direction of the rotor, and a second linear-shaped oil hole connected to at least one end of the linear-shaped oil hole in such a manner that it is inclined with respect to the linear-shaped oil hole in a direction to approach the other connecting portion in the peripheral direction of the rotor as it parts away from the linear-shaped oil hole. And, of the pair of connecting portions, in the other connecting portion, there is not formed an oil passage for allowing the outer and inner cylinders to communicate with each other.
Here, in the present specification and the appended claims, the expression "peripheral direction", unless otherwise specified, means the circumferential direction (=rotation direction) of the rotor and, similarly, the expression "radial direction" means the radial direction of the rotor.

In the above-structured opposed piston type disc brake according to the sixth aspect of the invention, the oil passage formed in the inside of the caliper includes a linear-shaped oil hole formed parallel to the axial direction of the rotor and having a length equal to or larger than the width of an opening formed outside in the radial direction of the rotor. Therefore, differently from a structure like the second example of the conventional structure shown in Fig. 30 in which the oil passage existing in the portion extending over the outer periphery of the rotor is inclined with respect to the axial direction of the rotor, the length of the oil passage extending over the outer periphery of the rotor can be shortened. Owing to this, although the temperature of the portion extending over the outer periphery of the rotor rises in braking, an increase in the temperature of the pressure oil flowing through the oil passage existing in this portion can be reduced sufficiently. Also, in the structure according to the sixth aspect of the invention, since the length of the whole of the oil passage existing in the caliper can also be reduced, the rate of the pressure oil remaining in the caliper to the total amount of the pressure oil including the pressure oil existing outside the caliper can be reduced. Thus, an increase in the temperature of the pressure oil can be reduced more effectively regardless of an increase in the temperature of the caliper in braking. That is, since the surface area of the whole of the oil passage existing within the caliper can be reduced, the amount of heat transmitted from the caliper to the pressure oil can be reduced and thus an increase in the temperature of the pressure oil can be reduced more effectively.

Also, since the amount of the pressure oil remaining in the caliper can be reduced, the amount of the air mixed into the pressure oil can also be reduced, thereby being able to prevent more effectively the occurrence of a vapor lock phenomenon at high temperatures. Further, the compression amount of the pressure oil in braking can be reduced and the difference between the times necessary for pressure generation in the inner and outer sides can be reduced sufficiently, which makes it possible to enhance the braking response to the operation to press down the brake pedal.

Also, in the structure according to the sixth aspect of the invention, of the oil passage formed in such portion of the caliper including one connecting portion as provides the lower side of the caliper in a state where the caliper is mounted on the vehicle, at least to one end thereof, there is connected the second linear-shaped oil hole. Also, the second linear-shaped oil hole is inclined with respect to the linear-shaped oil hole in such a manner that, as it parts away from the linear-shaped oil hole, it is inclined in a direction to approach the other connecting portion, which provides the upper side in a state where the caliper is mounted on the vehicle, with respect to the peripheral direction of the rotor. Owing to this, differently from the third example of the conventional structure shown in Figs. 31 and 32, when filling the oil passage and the respective cylinders within the caliper with the pressure oil, it is possible to sufficiently prevent the air from remaining in a portion of the caliper. And, even when the air happens to remain in a portion of the caliper, the residual air can be removed by the reduced number of times of air bleeding. This can reduce the time and labor necessary for the operation to charge the brake oil into the oil passage and cylinders and also can facilitate the operation to replace the brake oil.

According to a seventh aspect of the invention, preferably, the oil passage may include, on the two end portions of the linear-shaped oil hole, second and third linear-shaped oil holes respectively connected to the linear-shaped oil hole in such a manner that they are inclined with respect to the linear-shaped oil hole in a direction to approach the other connecting portion in the peripheral direction of the rotor as they part away from the linear-shaped oil hole. And, the linear-shaped oil hole, second and third linear-shaped holes are situated on the same virtual plane perpendicular to the height direction of the caliper. Here, the expression "the height direction of the caliper", in the whole of the present specification and appended claims, means a direction which provides the vertical direction when the caliper is supported on a horizontal surface in such a manner that the inside surface of the caliper facing inwardly in the radial direction of the rotor faces downward, and also which is perpendicular to the center axis of the rotor.
According to this favorable structure, since the linear-shaped oil hole as well as the second and third linear-shaped oil holes are situated on the same virtual plane, the total amount of the pressure oil remaining in the caliper can be reduced further, thereby being able to prevent an increase in the temperature of the pressure oil in braking more effectively. Also, since the oil passage includes the linear-shaped oil hole as well as the second and third linear-shaped oil holes, these oil holes can be formed easily by making holes in the caliper. This can eliminate the need to insert a pipe into the caliper, thereby being able to reduce the number of parts and the weight of the caliper. Further, in a state where the caliper is set on a jig and the height direction of the caliper is coincident with the vertical direction, while moving or rotating the caliper in the horizontal direction without moving the height direction thereof, the linear-shaped oil hole as well as the second and third linear-shaped oil holes can be worked easily. Also, in this working operation, while a working tool such as a drill or a reamer is left at its position as it is, simply by moving the caliper in the horizontal direction, for example, by moving it in a straight line direction on a horizontal surface or by rotating it on the horizontal surface, all of the oil holes can be worked. This can simplify the structure of the whole of the working apparatus and thus can reduce the costs necessary for the working operation.

Also, according to an eighth aspect of the invention, more preferably, the linear-shaped oil hole may be formed in such portion of the peripheral direction one end portion of the caliper including the above-mentioned one connecting portion as is near to the opening with respect to such peripheral direction.
According to this favorable structure, the whole amount of the pressure oil remaining within the caliper can be reduced still further. This makes it possible to prevent an increase in the temperature of the pressure oil in braking more effectively.

Also, more preferably, in the side surfaces of the body portions that provide the upper side surfaces of the caliper in a state where the caliper is mounted on the vehicle, there may be opened up the end portions of the outer and inner side oil passages, and the openings in such end portions of the oil passages that provide the upper end portions thereof may be closed by their associated bleeder screws respectively.
Here, the "outer and inner side oil passages" structure is not limited to a structure in which each passage includes only one oil hole, but it may include a structure in which separate oil holes are allowed to communicate with each other through a cylinder.
According to this favorable structure, using the bleeder screws, it is possible to prevent more effectively the air from remaining within the caliper.

Other aspects and advantages of the invention will be apparent from the following description, the drawings and the claims.

### BRIEF DESCRIPTION OF THE DRAWINGS

Fig. 1 is an enlarged section view of a first embodiment of a sealing plug structure according to the invention, corresponding the section view of the A portion shown in Fig. 32.
Figs. 2A to 2D are respectively schematic views of steps for manufacturing a partially spherical member constituting the first embodiment.
Fig. 3 is an enlarged section view of a second embodiment of a sealing plug structure according to the invention, which is similar to Fig. 1.
Fig. 4 is an enlarged section view of a third embodiment of a sealing plug structure according to the invention, which is similar to Fig. 1.
Fig. 5 is an enlarged section view of a fourth embodiment of a sealing plug structure according to the invention, which is similar to Fig. 1.
Fig. 6 is an enlarged section view of a modification of a sealing plug structure according to the first embodiment of the invention, which is similar to Fig. 1.
Fig. 7 is an enlarged section view of a fifth embodiment of a sealing plug structure according to the invention, which is similar to Fig. 1.
Fig. 8 is an enlarged section view of a sixth embodiment of a sealing plug structure according to the invention, which is similar to Fig. 1.
Fig. 9 is an enlarged section view of a seventh embodiment of a sealing plug structure according to the invention, which is similar to Fig. 1.
Fig. 10 is an enlarged section view of an eighth embodiment of a sealing plug structure according to the invention, which is similar to Fig. 1.
Fig. 11 is a partially omitted perspective view of another example of a caliper to which the sealing plug structure according to the invention is applied.
Fig. 12 is a view of the caliper when it is viewed from outside in the radial direction of a rotor.
Fig. 13 is a view of the caliper when it is viewed from inside in the radial direction of the rotor.
Fig. 14 is a section view taken along the B-B line shown in Fig. 12, showing a state where an inner piston and an inner pad are assembled together.
Fig. 15 is a partially omitted perspective view of a caliper constituting a disc brake according to a ninth embodiment of the invention.
Fig. 16 is a view of the caliper when it is viewed from outside in the radial direction of a rotor.
Fig. 17 is a section view taken along the A-A line shown in Fig. 16.
Fig. 18 is a section view taken along the B-B line shown in Fig. 16.
Fig. 19 is a view of the caliper shown in Fig. 15, when Fig. 15 is viewed from inside in the radial direction of the rotor.
Fig. 20 is an enlarged section view of the C portion shown in Fig. 19.
Fig. 21 is a section view taken along the D-D line shown in Fig. 16, showing a state where inner pistons and inner pads are assembled together.
Fig. 22 is a typical view of the caliper, showing a state where it is mounted on a vehicle.
Fig. 23 shows that the structure of the invention can reduce the length of an oil passage when compared with a conventional structure. Specifically, Fig. 23A is a schematic view of a conventional structure, and Fig. 23B is a schematic view of the ninth embodiment of the invention, respectively corresponding to the right end portion of Fig. 19.
Fig. 24 is a view of a caliper constituting a disc brake according to a tenth embodiment of the invention, similar to Fig. 16.
Fig. 25 is a view of the tenth embodiment, similar to Fig. 19.
Fig. 26 is a view of a disc brake according to an eleventh embodiment of the invention, similar to Fig. 21.
Fig. 27 is a graphical representation of the results of a first test.
Fig. 28 is a graphical representation of the results of a second test.
Fig. 29 is a perspective view of a first example of the conventional structure of an opposed piston type disc brake.
Fig. 30 is a section view of a second example of the conventional structure.
Fig. 31 is a partially omitted section view of a third example of the conventional structure.
Fig. 32 is a partially omitted section view taken along the C-C line shown in Fig. 31.
Fig. 33 is a section view of an example of the conventional structure of a high pressure accumulator having a gas intake port closed by a sealing plug structure.
Fig. 34 is a view corresponding to an enlarged section view of the D portion shown in Fig. 33.
Fig. 35 is a view of another example of the conventional plug structure, similar to Fig. 34.

### DETAILED DESCRIPTION OF THE EXEMPLARY EMBODIMENTS

### <First Embodiment>

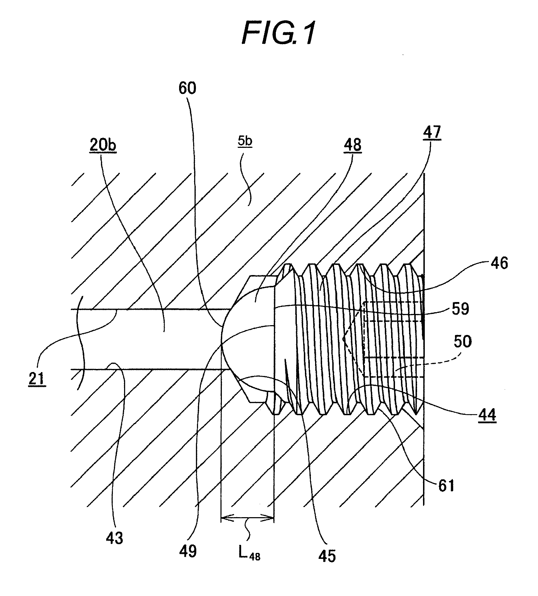

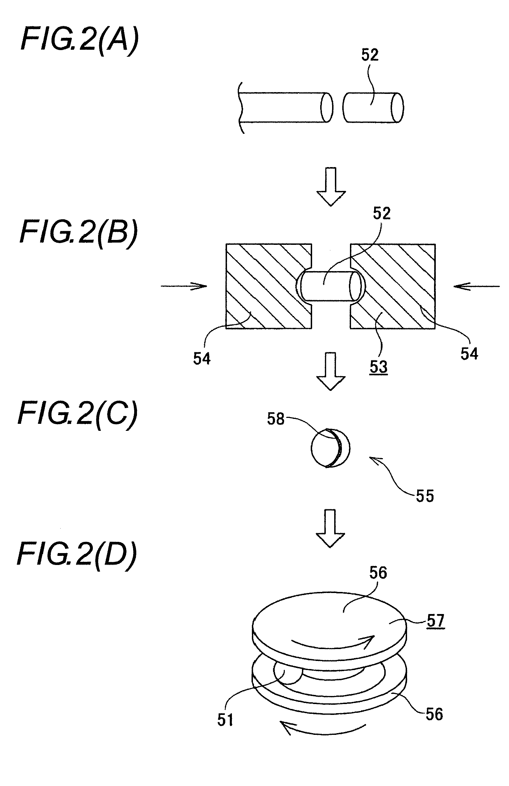

Figs. 1 and 2 (A) to 2 (D) respectively show a first embodiment according to the invention. An oil hole sealing plug structure according to the present embodiment includes a portion for liquid-tightly closing an end portion of an oil hole, specifically, a linear-shaped oil hole 20b constituting an oil passage 21 formed in a caliper 5b for a disc brake, {this applies similarly to other linear-shaped oil holes 20a and 20c (see Figs. 31 and 32)}. The other basic structures of the caliper 5b are similar to those of the caliper 5b that constitutes the disc brake 1 according to the third example of the conventional structure already shown in Figs. 31 and 32. Therefore, the equivalent parts of the present embodiment to those of the caliper 5b according to the third example of the conventional structure shown in Figs. 31 and 32 are given the same designations and thus the duplicate description and illustration thereof are omitted here; and, description will be given below mainly of the characteristic portions of the present embodiment.

In the present embodiment, one end (in Fig. 1, the right end) of the linear-shaped oil hole 20b is opened in the outer surface of the caliper 5b. The near-to-one-end portion of the linear-shaped oil hole 20b includes a small diameter portion 43 formed on the deep end side (in Fig. 1, the left end side) thereof, a large diameter portion 44 having a larger diameter than the small diameter portion 43, and a tapered surface 45 formed in the continuous portion between the large and small diameter portions 44 and 43. Of these portions, the large diameter portion 44 includes a female screw portion 46 formed on the near-to-open-end inner peripheral surface thereof. And, a screw member 47 serving as a pressing member is connected and fixed to the large diameter portion 44 and, at the same time, one end face (in Fig. 1, the left end face) of the screw member 47 is pressed against one side (in Fig. 1, the right side) of a hemispherical partial sphere member 48 serving as a plug and the other side (in Fig. 1, the left side) of the partial sphere member 48 is pressed against the tapered surface 45. The tapered surface 45 corresponds to a seal surface disclosed in the appended patent claims, while the section of the tapered surface 45 with respect to a virtual plane including the center axis of the linear-shaped oil hole 20b has a shape like a "ha" (Japanese katakana) shape made of straight lines or curved lines such as arcs.

The screw member 47 is formed to have a rod shape which does not include a head portion of a large diameter; and, in one end face of the screwmember 47, there is formed a plane-shaped pressing portion 49 extending at right angles to the center axis of the screw member 47 and, in the central portion of the end face (in Fig. 1, the right end face) thereof, there is formed a securing hole 50. For example, as the screw member 47, there is used a member made of steel such as SCM 435 and having a size of M5 x 0.5. Also, the securing hole 50, into which a tool such as a hexagonal wrench can be engaged, is formed to have a hexagonal section.

The partial sphere member 48 can be produced by cutting one half of a steel ball { Fig. 2 (D) For example, to manufacture this steel ball 51, as shown in Fig. 2(A), a wire rod made of steel such as bearing steel (SUJ2) is cut to a given length to produce a round rod shaped blank member 52; and, after then, as shown in Fig. 2(B), the round rod shaped blank member 52 is press worked from both sides in the axial direction thereof using a ball header 53. The ball header 53 includes a pair of metal molds 54 and 54 each having a hemispherical surface formed on one side. These two metal molds 54 and 54 are pressed against the round rod shaped blank member 52 from both sides in the axial direction thereof to thereby work the round rod shaped blank member 52 into such a spherical-shaped blank member 55 as shown in Fig. 2(B). Next, as shown in Fig. 2(D), the thus produced spherical-shaped blank member 55 is ground by a steel ball grinder 57 including a pair of discs 56 and 56 which can be rotated with respect to each other, thereby producing the steel ball 51 from which a bur 58 {Fig. 2(C)} produced on the outer surface of the spherical-shaped blank member 55 has been removed. This steel ball 51, for example, is formed to have a diameter of about 3.5 mm and should correspond to the class 20 of JIS B150. After then, while an operator is clamping the thus produced steel ball 51 with a small force using a jig, the operator grinds one half of the steel ball 51 little by little to form a plane-shaped pressure receiving portion 59 (Fig. 1) on one side of the steel ball 51, thereby producing the above-mentioned partial sphere member 48. The outer surface of the thus produced partial sphere member 48 includes a hemispherical surface portion 60 and a plane-shaped pressure receiving portion 59. Of these two portions, the hemispherical surface portion 60 has a shape that can be obtained when a semicircle, which consists of a curved line, is rotated about the center axis of the partial sphere member 48.

When closing one end portion of the linear-shaped oil hole 20b, in a state where the partial sphere member 48 is disposed inside the large diameter portion 44 formed in the near-to-one-end opening portion of the linear-shaped oil hole 20b, the male screw portion 61 of the screw member 47 is threadedly engaged with and tightened on a female portion 46 formed in the large diameter portion 44. In the threaded engagement of the male screw portion 61, the tightening operation is carried out while a tool such as a hexagonal wrench is engaged into the securing hole 50 formed in the other end face of the screw member 47. And, the pressing portion 49 of the screw member 47 is pressed against the pressure receiving portion 59 of the partial sphere member 48 and the hemispherical surface portion 60 of the partial sphere member 48 is liquid-tightly pressed against the tapered surface 45. As a result of this, the one end opening of the linear-shaped oil hole 20b can be liquid-tightly closed.

According to the oil hole sealing plug structure of the present embodiment structured in the above-mentioned manner, the size and weight of the caliper 5b, in which the linear-shaped oil hole 20b is formed, can be reduced and, at the same time, even when the pressure of the pressure oil flowing through the linear-shaped oil hole 20b varies, the possible deformation of the partial sphere member 48 for closing one end portion of the linear-shaped oil hole 20b can be reduced sufficiently.
That is, according to the present embodiment, the pressing portion 49 formed one end face of the screw member 47 fixed to the large diameter portion 44 is pressed against the plane-shaped pressure receiving portion 59 formed in the partial sphere member 48. This can increase the number of contact portions between the partial sphere member 48 and screw member 47; and, especially, according to the present embodiment, since the pressing portion 49 is formed in a plane shape to thereby increase the areas of the contact portions, surface pressure acting on these contact portions can be reduced sufficiently. Therefore, in a state where a disc brake including the caliper 5b is mounted on a vehicle, even when, because the pressure of the pressure oil flowing through the linear-shaped oil hole 20b is varied, for example, is increased for braking, an axial force is applied to the partial sphere member 48 for closing the end portion of the linear-shaped oil hole 20b, the elastic deformation of the partial sphere member 48 caused by such axial force can be reduced sufficiently.

As a result of this, like the present embodiment, when the invention is applied to the portion for closing the end portion of the linear-shaped oil hole 20b constituting the oil passage 21 through which the pressure oil is fed into the outer cylinder 7 and inner cylinder 8 (see Figs. 31 and 32) of the caliper 5b, the increase amount (the increase amount of the loss liquid amount), when it is assumed that the partial sphere member 48 is not deformed at all, of the feed amount of the pressure oil to be fed into the caliper 5b for generating a given level of oil pressure can be reduced sufficiently. Also, regardless of the axial force applied to the partial sphere member 48, the sealing performance between the partial spheremember 48 and tapered surface 45 can be secured effectively for a long period of time. Further, according to the present embodiment, since the axial direction length L₄₈ of the partial sphere member 48 can be shortened when compared with a case where the partial sphere member 48 is formed to have a perfect sphere shape, the length of the linear-shaped oil hole 20b can also be shortened, which can facilitate the reduction in the size and weight of the caliper 5b having the linear-shaped oil hole 20b.

Also, according to the present embodiment, theoutersurface of the partial sphere member 48 is formed of the hemispherical surface portion 60 consisting of a portion of a spherical surface and a plane-shaped pressure receiving portion 59. For this reason, like the present embodiment, the partial sphere member 48 can be formed by cutting one half of the steel ball 51 { Fig. 2(D)} which a spherical member, whereby the partial sphere member 48 can be manufactured easily.

Also, according to the present embodiment, the male screw portion 61 of the screw member 47 is threadedly engaged with and tightened on the female screw portion 46 formed in one end portion of the linear-shaped oil hole 20b, whereby the pressing portion 49 formed in the screw member 47 can be pressed against the pressure receiving portion 59 of the partial sphere member 48. This can facilitate the operation to connect the screw member 47 to the end portion of the linear-shaped oil hole 20b. Further, by varying the tightening torque for connecting the screw member 47 to the female screw portion 46, the amount of distortion of the partial sphere member 48 can be varied such that it can provide a target amount, in other words, can be varied easily in a so called calculated manner. Therefore, the management of the sealing condition between the partial sphere member 48 and tapered surface 45 can be carried out easily.

On the other hand, when the sealing plug structure shown in the previously discussed figures 34 and 35 is used in the portion for closing the end portion of the linear-shaped oil hole 20b, since the contact portion between the screw member 40 and steel ball 39 provides only one contact portion, the area of the contact portion varies greatly in a microscopic manner as the axial force generated in the steel ball 39 increases.
In this case, the relationship between the axial direction distortion amount generated in the steel ball 39 and the tightening amount (tightening rotation angle) of the screw member 40 does not provide a linear proportion relationship, but the design setting of the tightening torque of the screw member 40 for holding properly the pressure of the pressure oil within the linear-shaped oil hole 20b is greatly influenced by the difference between the materials and shapes of the steel ball 39 and screw member 40 and is thereby varied greatly. On the other hand, according to the present embodiment, since the contact portion between the screw member 47 and partial sphere member 48 can be formed in a plane, the relationship between the tightening amount (tightening rotation angle) of the screw member 47 with respect to the female screw portion 46 and the axial direction distortion amount generated in the partial sphere member 48 is allowed to provide a linear proportion relationship and thus the management of the sealing condition can be carried out easily by adjusting the tightening rotation angle of the screw member 47. Also, when the screw member 47 and partial sphere member 48 are made of different materials, it is necessary to take into account the reduction in the axial force due to the thermal expansion difference between the two members 47 and 48 that is caused by variations in the temperatures thereof. However, according to the present embodiment, since the axial direction length L₄₈ of the partial sphere member 48 can be shortened, the partial sphere member 48 can be made hard to shrink regardless of variations in the temperatures when the partial sphere member 48 is in use, thereby being able to prevent the axial force applied to the partial sphere member 48 and screw member 47 from decreasing excessively.

Further, according to the present embodiment, the hemispherical surface portion 60 is formed in the end portion of the partial sphere member 48 that is opposed to the tapered surface 45. The hemispherical surface portion 60 has a shape which can be obtained when a semicircle consisting of a curved line is rotated about the center axis of the partial sphere member 48. Therefore, in mounting the partial sphere member 48, even when the partial sphere member 48 is rotated inside the large diameter portion 44, the lowering of the sealing performance in one end portion of the linear-shaped oil hole 20b can be prevented effectively. Also, there is eliminated the need to restrict the phase of the rotation direction of the partial sphere member 48 when the partial sphere member 48 is mounted inside the large diameter portion 44, thereby being able to facilitate the mounting operation.

### <Second Embodiment>

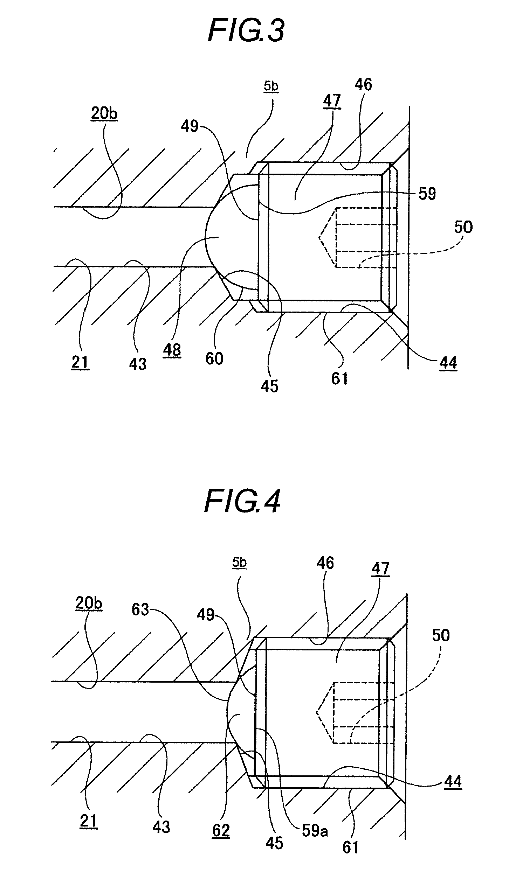

Next, Fig. 3 shows a second embodiment according to the invention. According to the present embodiment, when compared with the before-mentioned first embodiment, the other end face of the screw member 47 is inserted to the deeper side than the one-end side opening end edge of the linear-shaped oil hole 20b. And, in this state, the hemispherical surface portion 60 of the partial sphere member 48 is pressed against the tapered surface 45. The remaining structures and operations of the present embodiment are similar to the first embodiment.

### <Third Embodiment>

Next, Fig. 4 shows a third embodiment according to the invention. According to the present embodiment, as a member to be pressed against the tapered surface 45, the hemispherical shaped partial sphere member 48 (see Figs. 1 and 3) is not used but, instead, there is used a second partial sphere member 62 which is formed in a shape including only such end portion of the steel ball 51 (see Fig. 2(D)) as having a 1/4 length of the diameter of the steel ball 51. Therefore, only the end portion having a 1/4 length of the diameter of the steel ball 51 is left as it is but the remaining portions of the steel ball 51 are cut down, thereby producing the second partial sphere member 62. And, the plane-shaped pressing portion 49 of the screw member 47 fixed to a large diameter portion 44 formed near to one end (in Fig. 4, near to the right end) of the linear-shaped oil hole 20b is pressed against the plane-shaped pressure receiving portion 59a formed in the second partial sphere member 62, and the partial spherical surface portion 63 of the second partial sphere member 62 is pressed against the tapered surface 45, thereby liquid-tightly closing one end portion (in Fig. 4, the right end portion) of the linear-shaped oil hole 20b.

According to the present embodiment structured in this manner, when compared with the above-mentioned respective embodiments, the axial direction length of the second partial sphere member 62 serving as a plug can shortened further.
The remaining structures and operations of the present embodiment are similar to the second embodiment shown in Fig. 3 and thus the duplicate description thereof is omitted here.

Here, according to the present embodiment, in order to enhance the workability of the female screw portion 46, preferably, there may be employed a structure in which a pillar portion having a smaller diameter than the outside diameter of the male screw portion 61 is formed in one end face (in Fig. 4, the left end face) of the screw member 47 integrally therewith, a plane-shaped pressing portion formed in the leading end face of the pillar portion is pressed against a plane-shaped pressure receiving portion 59a formed in the second partial sphere member 62, and the partial spherical surface portion of the second partial sphere member 62 is pressed against the tapered surface 45.

### <Fourth Embodiment>

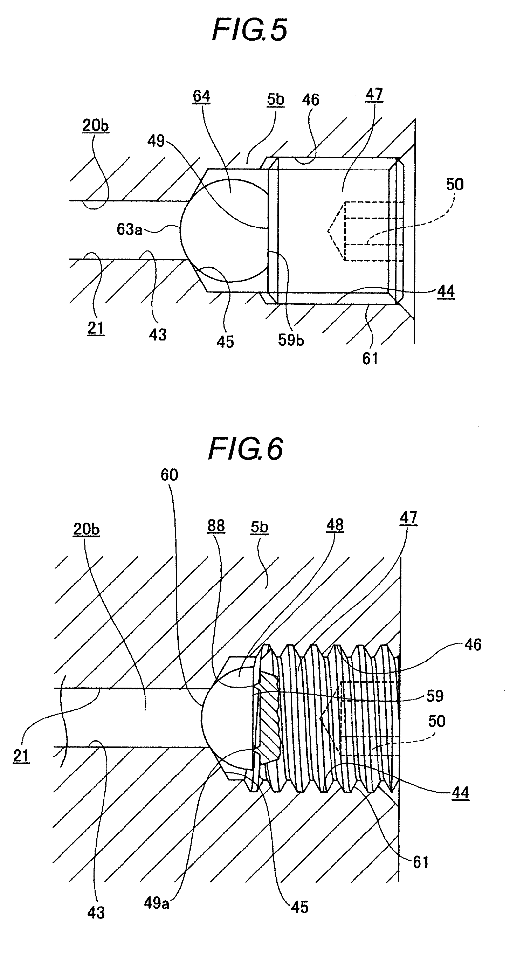

Next, Fig. 5 shows a fourth embodiment according to the invention. According to the present embodiment, as a member to be pressed against the tapered surface 45, there is used a third partial sphere member 64 which is formed in a shape including only such end portion of the steel ball 51 (see Fig. 2(D)) as having a 3/4 length of the diameter of the steel ball 51. Therefore, only the end portion having a 3/4 length of the diameter of the steel ball 51 is left as it is but the remaining portions of the steel ball 51 are cut down, thereby producing the third partial sphere member 64. And, the plane-shaped pressing portion 49 of the screw member 47 fixed to a large diameter portion 44 formed near to one end of the linear-shaped oil hole 20b is pressed against the plane-shaped pressure receiving portion 59a formed in the third partial sphere member 64, and the partial spherical surface portion 63a of the third partial sphere member 64 is pressed against the tapered surface 45, thereby liquid-tightly closing one end portion of the linear-shaped oil hole 20b.

According to the present embodiment structured in this manner, the axial direction length of the third partial sphere member 64 serving as a plug is longer than in the before-mentioned respective embodiments. However, when compared with the structure shown in Figs. 34 and 35 in which the steel ball 39 is used as the plug, the axial direction length of the plug can be shortened.
The remaining structures and operations of the present embodiment are similar to the first embodiment shown in Figs 1 and 2. Therefore, the equivalent parts of the present embodiments to the first embodiment are given the same designations and thus the duplicate description thereof is omitted here.

Here, in the above-mentioned respective embodiments, in one end face of the screw member 47, there is formed the plane-shaped pressing portion 49. However, the pressing portion 49 is not limited to the plane shape. For example, as shown in Fig. 6, in the first embodiment shown in Fig. 1, a cylindrical-shaped projecting portion 88 may be formed on one end face (in Fig. 6, the left end face) of the screw member 47, and the leading end edge of this cylindrical-shaped projecting portion 88 may be sharpened. This cylindrical-shaped projecting portion 88 is situated on a virtual plane perpendicular to the center axis of the screw member 47. In this case, the leading end edge of the cylindrical-shaped projecting portion 88 provides a pressing portion 49a. This pressing portion 49a does not provide a plane shape but provides a circular shape. However, by pressing this pressing portion 49a against the plane-shaped pressure receiving portion 59 of the partial sphere member 48 serving as the plug, the number of contact portions between the partial sphere member 48 and screw member 47 can be increased. This can reduce surface pressure acting on each of the contact portions sufficiently. Also, besides this structure, there may also be employed a structure in which multiple projections are provided on one end face of the screw member 47 and the leading ends of these projections are situated on a virtual plate perpendicular to the center axis of the screw member 47, whereby the leading ends of the projections are used as pressing portions to be pressed against the pressure receiving portion 59 of the partial sphere member 48.

### <Fifth Embodiment>

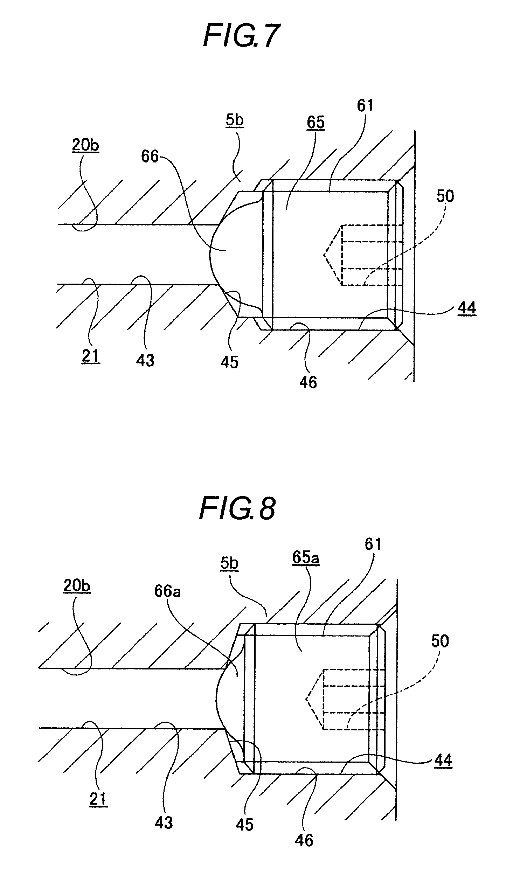

Next, Fig. 7 shows a fifth embodiment according to the invention. According to the present embodiment, unlike the above-mentioned respective embodiments, a male screw portion 61 formed integrally on the near-to-base-end (in Fig. 7, the near-to-right-end) of a shaft member 65 serving as a plug is threadedly engaged with and tightened on the female screw portion 46, whereby the shaft member 65 is fixed to the inside of the large diameter portion 44. Also, a hemispherical projecting portion 66 is provided on the leading end face (in Fig. 7, the left end face) of the shaft member 65 integrally therewith, and the leading end face of the projecting portion 66 is liquid-tightly pressed against the tapered surface 45. Also, in the central portion of the base end face (in Fig. 7, the right end face) of the shaft member 65, there is formed a securing hole 50 having a hexagonal section. The base end face of the shaft member 65 is inserted the deeper portion than the one-end-side opening end edge of the linear-shaped oil hole 20b. According to the present embodiment structured in this manner, the shaft member 65 has a structure in which, in the second embodiment shown in Fig. 3, the screw member 47 and hemispherical partial sphere member 48 are connected together as an integral body.

According to the present embodiment structured in this manner, a separate member, which is produced from the shaft member 65, is fixed to the large diameter portion 44; and also, there is eliminated the need to press the separate member against the shaft member 65. This makes it possible to reduce the number of parts. Also, there is eliminated the need to develop (a structure for) a device for the axial force transmission between the shaft member 65 and the above-mentioned separate member. Thus, even when an axial force is applied to the shaft member 65 for closing the end portion of the linear-shaped oil hole 20b due to variations in the pressure of the pressure oil flowing through the linear-shaped oil hole 20b, the elastic deformation of the shaft member 65 can be controlled down to a sufficiently small amount. Further, although the hemispherical projecting portion 66 to be pressed against the tapered surface 45 and the male screw portion 61 serving as a portion for fixing the shaft member 65 to the large diameter portion 44 are provided, the whole length of the shaft member 65 can be shortened; and thus, the length of the linear-shaped oil hole 20b can also be shortened, which can facilitate the reduction in the size and weight of the caliper 5b as well.

Also, according to the present embodiment, on such end portion of the shaft member 65 as is opposed to the tapered surface 45, there is provided the hemispherical projecting portion 66. The outer surface of the projecting portion 66 has a shape which can be obtained when a substantial semicircle consisting of a curved line is rotated about the center axis of the shaft member 65. Therefore, even when the shaft member 65 is rotated inside the large diameter portion 44 in the mounting operation of the shaft member 65, it is possible to effectively prevent the degraded sealing performance of the end portion of the linear-shaped oil hole 20b. Also, when the shaft member 65 is mounted into the inside of the large diameter portion 44, there is eliminated the need to regulate the phase of the rotation direction of the shaft member 65, which can facilitate the mounting operation.
The remaining structures and operations of the present embodiment are similar to those of the first embodiment shown in Figs. 1 and 2. Therefore, the equivalent parts of the present embodiment to the first embodiment are given the same designations and thus the duplicate description thereof is omitted here.

### <Sixth Embodiment>

Next, Fig. 8 shows a sixth embodiment according to the invention. According to the present embodiment, a shaft member 65a has a structure in which, in the third embodiment shown in Fig. 4, the screw member 47 and second partial sphere member 62 are connected together as an integral body. That is, according to the present embodiment, a projecting portion 66a, which provided on the leading end face of the shaft member 65, has a shape which can be obtained when there is left only the end portion of a sphere having a length of 1/4 of the diameter of a sphere. And, the leading end face of the projecting portion 66a is liquid-tightly pressed against the tapered surface 45.

According to the present embodiment structured in this manner, the whole length of the shaft member 65 can be shortened further than the fifth embodiment shown in Fig. 7.
The remaining structures and operations of the present embodiment are similar to the fifth embodiment shown in Fig. 7. Therefore, the equivalent parts of the present embodiment to the fifth embodiment are given the same designations and thus the duplicate description thereof is omitted here.

### <Seventh Embodiment>

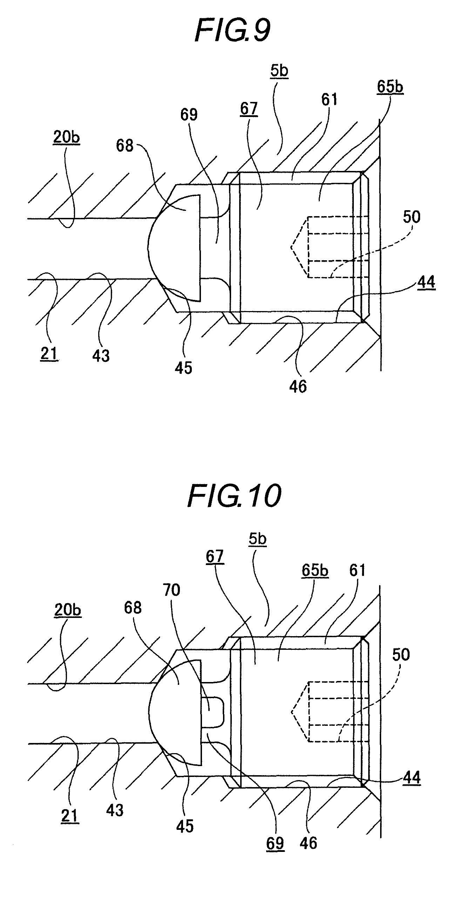

Next, Fig. 9 shows a seventh embodiment according to the invention. According to the present embodiment, the main body portion 67 of a shaft member 65b having a male screw portion 61 formed on the outer peripheral surface thereof is connected to a hemispherical pressing portion 68 by a pillar portion 69 having a small diameter. The diameter of the pillar portion 69 is set smaller than both the diameter of the base end face (in Fig. 9, the right end face) of the pressing portion 68 and the diameter of the main body portion 67. And, the leading end face of the pressing portion 68 is liquid-tightly pressed against the tapered surface 45.
The remaining structures and operations of the present embodiment are similar to the fifth embodiment shown in Fig. 5. Therefore, the equivalent parts of the present embodiment to the fifth embodiment are given the same designations and thus the duplicate description thereof is omitted here.

### <Eighth Embodiment>

Next, Fig. 10 shows an eighth embodiment according to the invention. According to the present embodiment, in the seventh embodiment shown in Fig. 9, in the small-diameter pillar portion 69, there is formed a penetration hole 70 which penetrates through the pillar portion 69 in the diameter direction thereof. According to this structure, the weight of the shaft member 65b can be reduced. Here, when there is or are formed one or more bottomed recessed portions at one or more portions of the outer peripheral surface of the small-diameter pillar portion 69 in the circumferential direction thereof, the weight of the shaft member 65b can also be reduced.

Here, in the first to fourth embodiments shown in Figs. 1 to 5 as well as in the other embodiment shown in Fig. 6, instead of the partial sphere member 48, second and third partial sphere members 62 and 64, there can also be used a plug the portion of which to be pressed against the tapered surface 45 is not a partially spherical portion but is a curved surface portion. Also, in the fifth to eighth embodiments shown in Figs. 7 to 10, the leading end faces of the projecting portions 66, 66a provided on the shaft members 65, 65a, 65b and the leading end face of the pressing portion 68 may also have a shape which is not a partially spherical surface but is a curved surface. Also, in the above-mentioned respective embodiments, in the end face of the screw member 47 or in the end faces of the shaft members 65, 65a, 65b, there is formed the securing hole 50 having a hexagonal section, and a tool such as a hexagonal wrench can be engaged into the securing hole 50. However, instead of the securing hole 50, in the end face of the screw member 47 or shaft members 65, 65a, 65b, there may also be formed a linear-shaped or cross-shaped securing groove, and a minus driver or a plus driver may also be engaged into the securing groove.

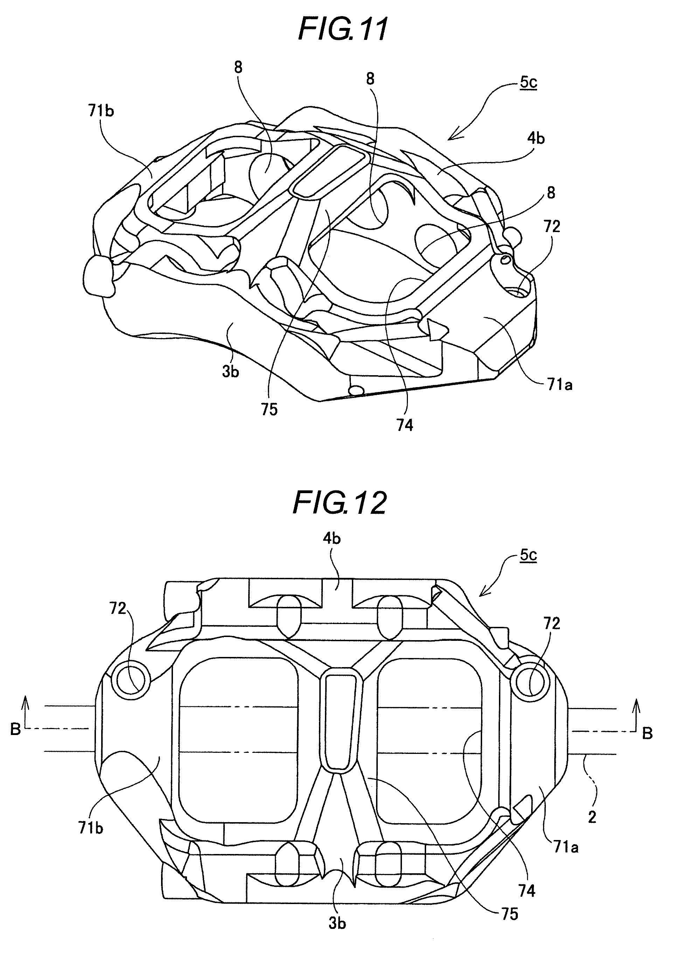

Also, in the above-mentioned sealing plug structures of the respective embodiments of the invention, description has been given of a case where the respective structures are used in the portion for closing the end portion of the linear-shaped oil hole 20b (20a, 20c) of the caliper 5b constituting the disc brake 1 according to the second example of the conventional structure shown in Figs. 31 and 32. However, the structure of a caliper to which the sealing plug structures of the above-mentioned respective embodiments are applied is not limited to the structure of the caliper 5b as shown in Figs. 31 and 32, but the sealing plug structures of the above-mentioned respective embodiments can also be applied to a caliper having any one of various structures in which the end portion of an oil hole is opened up in the outer surface of the caliper. For example, in Figs. 11 to 14, there is shown another type of caliper 5c to which the sealing plug structures of the above-mentioned respective embodiments can be applied.

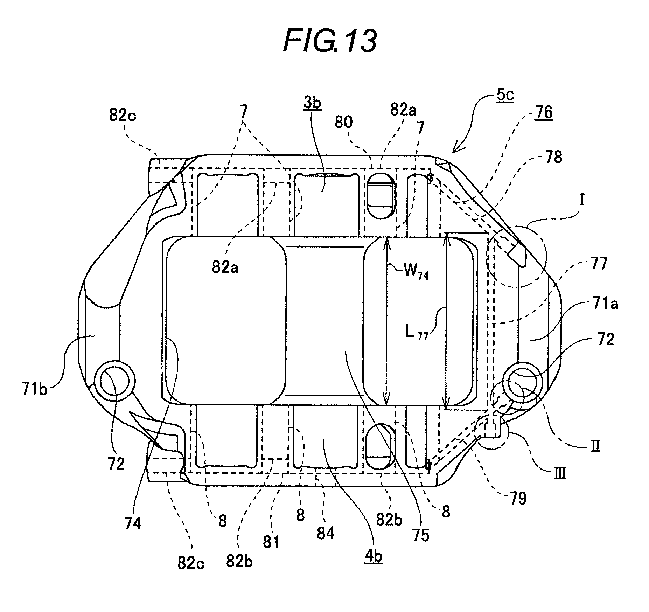

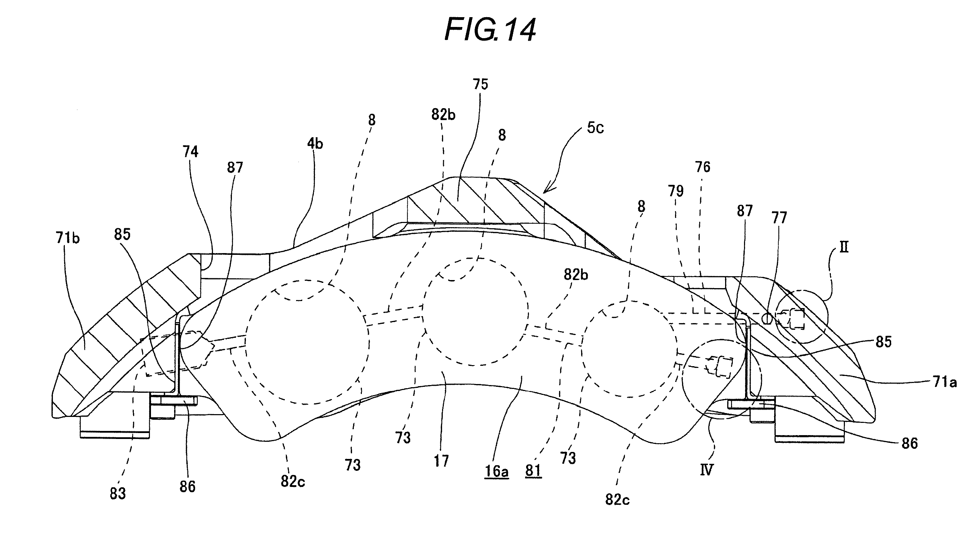

This caliper 5c can be formed, for example, by casting light alloy such as aluminum alloy or iron-system alloy into an integral body. The caliper 5c includes: outer and inner body portions 3b and 4b respectively disposed on both sides in the axial direction (in Figs. 12 and 13, in the vertical direction; in Fig. 14, in the front and back direction) of a rotor 2; and, a pair of connecting portions 71a and 71b for connecting together the peripheral direction (in Figs. 12 to 14, in the right and left direction) two end portions of the two body portions 3b and 4b in such a manner that they are formed integrally with each other. When mounting the disc brake onto a vehicle, the caliper 5c is mounted onto the vehicle body of the vehicle in such a manner that, of the paired connecting portions 71a and 71b, one (in Figs. 11 to 14, the right) connecting portion 71a is lower in position than the other (in Figs. 11 to 14, the left) connecting portion 71b. In the peripheral direction two end portions of the caliper 5c on the inner side thereof with respect to the rotor 2, there are formed mounting holes 72 and 72 ("the inner side" means the side that is near to the width direction central portion of the vehicle in a state where the caliper 5c is mounted on the vehicle; specifically, in Figs. 11 and 14, the back side; in Fig. 12, the upper side; in Fig. 13, the lower side. On the other hand, "the outer side" means the side that exists on the width direction outside of the vehicle in a state where the caliper 5c is mounted on the vehicle; specifically, in Figs. 11 and 14, the front side; in Fig. 12, the lower side; in Fig. 13, the upper side). The caliper 5c can be mounted onto the vehicle body using bolts (not shown) which are inserted into the mounting holes 72 and 72 respectively.

Also, according to the illustrated embodiment, on the two body portions 3b and 4b, there are provided three outer cylinders and three inner cylinders apiece, a total of six outer and inner cylinders 7 and 8; and, outer pistons (not shown) and inner pistons 73, 73 (Fig. 14) can be respectively inserted into these cylinders 7 and 8 in such a manner that they are liquid-tight and can be shifted in the axial direction of the rotor 2.

Also, on the peripheral direction central portion of an opening 74 formed outside in the diameter direction between the two body portions 3b and 4b, there is provided a reinforcing rib 75 in such a manner that it extends over between the two body portions 3b and 4b. Further, pressure oil can be fed to and discharged from the respective cylinders 7, 8 provided on the caliper 5c. And, in the inside portions of the two body portions 3b, 4b and one connecting portion 71a (of the paired connecting portions 71a and 71b), there is an oil passage 76 (Fig. 13); and, the oil passage 76 allows communication between such ones of the above cylinders 7, 8 as are disposed on the side of one connecting portion 71a. The oil passage 76 includes first to third linear-shaped oil holes 77 to 79 which are respectively formed in the peripheral direction one end portion (in Figs. 11 to 14, the right end portion) of the caliper 5c. The first linear-shaped oil hole 77 is disposed parallel to the axial direction of the rotor 2. Also, the length L₇₇ (Fig. 13) of the first linear-shaped oil hole 77 extending between the second and third linear-shaped oil holes 78 and 79 is set equal to or larger than the width W₇₄ (Fig. 13) of the opening 74 (L₇₇ ≥ W₇₄).

Also, the second and third linear-shaped oil hole 78 and 79 are respectively connected to the two ends of the first linear-shaped oil hole 77 in such a manner that, as they part away from the first linear-shaped oil hole 77, they are inclined with respect to the first linear-shaped oil hole 77 in a direction to approach the other connecting portion 71b in the peripheral direction of the rotor 2. Further, the first to third linear-shaped oil holes 77 to 79 are respectively situated on the same virtual plane perpendicular to the height direction (in Figs. 12 and 13, in the front and back direction; in Fig. 14, in the vertical direction) of the caliper 5c. Here, the height direction of the caliper 5c means a direction which provides the vertical direction when the caliper 5c is supported on a horizontal surface in such a manner that the inside surface of the caliper 5c facing inside in the diameter direction of the rotor 2 is allowed to face downward, and also which is a direction perpendicular to the central axis of the rotor 2. Also, the first linear-shaped oil hole 77 is disposed in such portion of the one connecting portion 71a as is near to the opening 74 (in Fig. 13, near to the left) with respect to the peripheral direction of the rotor 2.

These first to third linear-shaped oil holes 77 to 79 are formed by making holes in the caliper 5c. Therefore, at least one-side end portions of these oil holes 77 to 79 are opened in the outer surface of the caliper 5c just after execution of the hole making operation. Thus, according to the present embodiment, the one-side end portions (in Figs. 13 and 14, the portions that are surrounded by I, II, III and IV) of these oil holes 77 to 79 are closed by any one of the sealing plug structures according to the first to 8 embodiments and the modification thereof respectively shown in Figs. 1 to 10.

Also, in the outer and inner body portions 3b and 4d, there are formed a pair of outer and inner oil passages 80 and 81 which are different from the oil passage 76. These outer and inner oil passages 80 and 81 respectively include:
oil holes 82a and 82b respectively for allowing communication between the outer cylinders 7 and 7 as well as between the inner cylinders 8 and 8; and, oil holes 82c and 82c respectively formed in such portion of the caliper 5c as is near to the peripheral direction two ends of the caliper 5c. And, a pair of bleeder screws 83 (Fig. 14) are connected to such caliper 5c peripheral direction other side surfaces (in Figs. 11 to 14, the left side surfaces) of the inner and outer body portions 3b and 4b as provide the upper end face in a state where the caliper 5c is mounted on the vehicle. And, these bleeder screws 83 are used to close the one-end openings serving as the upper ends of the oil holes 82c and 82c formed in the outer and inner body portions 3b and 4b. Also, such end portion openings (in Fig. 14, the portions that are surrounded by IV) of the oil holes 82c and 82c on the opposite side to the bleeder screws 83 as are situated nearest to the lower end of the caliper 5c in a state where the caliper 5c is mounted on the vehicle are closed by any one of the sealing plug structures according to the first to eighth embodiments and another embodiment respectively shown in Figs. 1 to 10.

In a state where the caliper 5c is mounted on the vehicle, the end portion of a brake hose is connected to the feed/discharge port 84 communicating with the inner cylinder 8, whereby the pressure oil can be fed to and discharged from to the respective cylinders 7 and 8 using the brake hose. Also, in the illustrated embodiment, of the paired connecting portions 71a and 71b of the caliper 5c, in the other connecting portion 71b, there is not formed an oil passage which is used to allow the outer and inner cylinders 7 and 8 to communicate with each other.

When this caliper 5c is in use, inner and outer pads 16a (only the inner pad 16a is shown in Fig. 14, but the outer pad is not shown) are supported inside the caliper 5c in such a manner that they can be shifted in the axial direction of the rotor 2. For this purpose, the side surfaces of first and second receiving plates 85 and 86 connected and fixed to the inside diameter side surfaces (in Figs. 11 and 14, the lower surfaces; in Fig. 12, the back surfaces; in Fig. 13, the front surfaces) of the connecting portions 71a and 71b are used to constitute support portions 87 and 87 each having an L-shaped section; and, the peripheral direction two end portions of the pads 16a are supported on the support portions 87 and 87 in such a manner that they can be shifted in the axial direction of the rotor 2. In a braking operation, the linings 17 of the outer and inner pads 16a supported on the caliper 5c may be pressed against the two side surfaces of the rotor 2 by the inner and outer pistons 73 and 73 for braking.
The above-mentioned sealing plug structures according the first to eighth embodiments and the modification thereof respectively shown in Figs. 1 to 10 can also be applied to portions for closing the end portions of the linear-shaped oil holes 77 to 79 and the end portions of oil holes 82c respectively shown in Figs. 11 to 14.
Here, in the above-mentioned respective embodiments, description has been given of a case where the invention is applied to the caliper of the opposed piston disc brake. However, the invention is not limited to this but it can also be applied to all of sealing plug structures for closing the oil holes of parts (oil pressure parts) using oil pressure.

### <Ninth Embodiment>

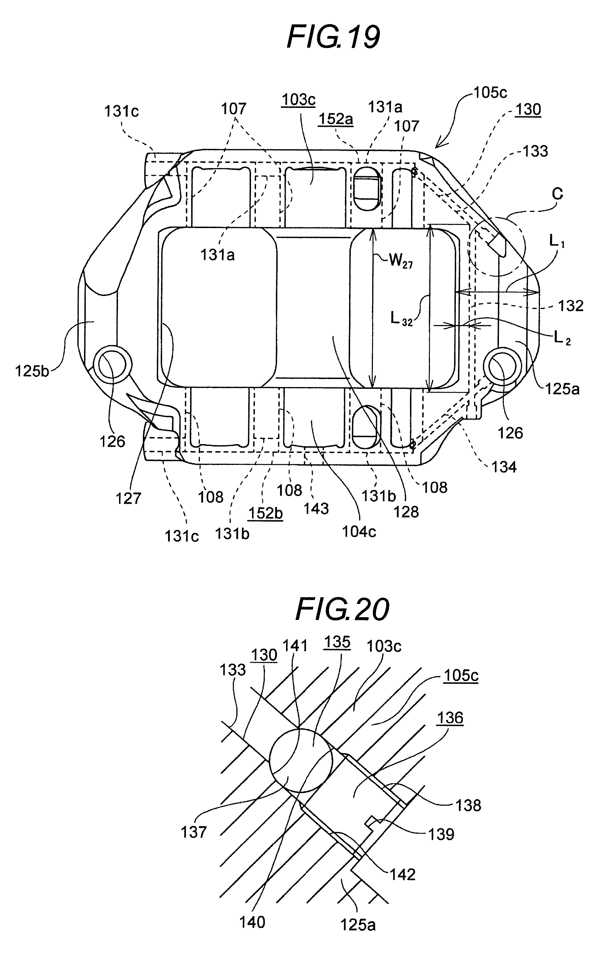

Figs. 15 to 22 respectively show a ninth embodiment according to the invention. A disc brake according to the present embodiment includes a caliper 105c so disposed as to extend over a rotor 102 which rotates together with the wheel of a vehicle. This caliper 105c can be formed, for example, by casting light alloy such as aluminum alloy or iron-system alloy into an integral body. The caliper 105c includes: outer and inner body portions 103b and 104b respectively disposed on both sides in the axial direction (in Figs. 16 and 19, in the vertical direction; in Figs. 17, 18 and 21, in the front and back direction) of the rotor 102; and, a pair of connecting portions 125a and 125b for connecting together the peripheral direction (in Figs. 15 to 18 and 21, in the right and left direction) two end portions of the two body portions 103b and 104b in such a manner that they are formed integrally with each other. When mounting the disc brake onto a vehicle, the caliper 105c is mounted onto the vehicle body of the vehicle in such a manner that, of the paired connecting portions 125a and 125b, one (in Figs. 15 to 17, 19 and 21, the right; and, in Fig. 18, the left) connecting portion 125a is lower in position than the other (in Figs. 15 to 17, 19 and 21, the left; in Fig. 18, the right) connecting portion 125b. In the peripheral direction two end portions of the caliper 105c on the inner side thereof with respect to the rotor 102, there are formed mounting holes 126 and 126 ("the inner side" means the side that is near to the width direction central portion of the vehicle in a state where the caliper 105c is mounted on the vehicle; specifically, in Figs. 15, 17 and 21, the back side; in Fig. 16, the upper side; in Fig. 18, the front side; and, in Fig. 19, the lower side. On the other hand, "the outer side" means the side that exists on the width direction outside of the vehicle in a state where the caliper 105c is mounted on the vehicle; specifically, in Figs. 15, 17 and 21, the front side; in Fig. 16, the lower side; in Fig. 18, the back side; and, in Fig. 19, the upper side). The caliper 105c can be mounted onto the vehicle body using bolts (not shown) which are inserted into the mounting holes 126 and 126 respectively.

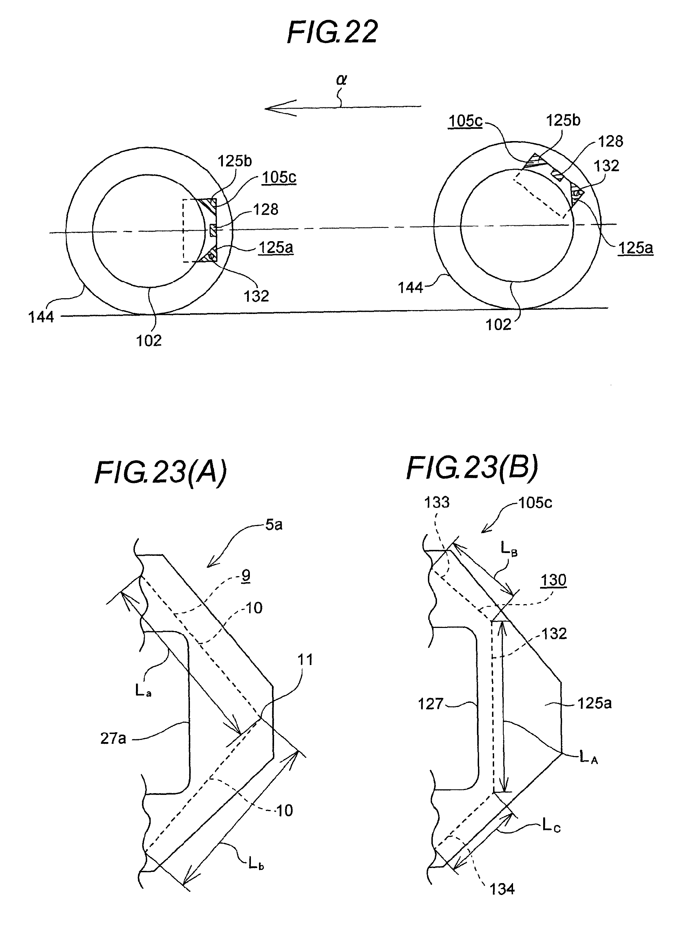

For example, as shown typically in Fig. 22, when the caliper 105c is disposed in the rear of a wheel 144 with respect to the advancing direction of the vehicle shown by an arrow mark α in Fig. 22, as shown on the left in Fig. 22, the caliper 105c may be mounted on the vehicle body in such a manner that the height direction (in Figs. 15, 17, 18 and 21, in the vertical direction; and, in Figs. 16 and 19, in the front and back direction) of the caliper 105c and the horizontal direction (in Fig. 22, in the right and left direction) of the caliper 105c coincide with each other; or, as shown on the right in Fig. 22, the caliper 105c may be mounted such that the height direction of the caliper 105c is inclined with respect to the horizontal direction thereof. In these cases, the caliper 105c may be mounted on the vehicle body in such a manner that one connecting portion 125a is lower in position than the other connecting portion 125b. Here, the caliper 105c may not be disposed in the rear of the wheel 144 with respect to the vehicle advancing direction, but it can also be disposed in front of the wheel 144. In this case as well, the caliper 105c may be mounted on the vehicle body in such a manner that one connecting portion 125a is lower in position than the other connecting portion 125b.

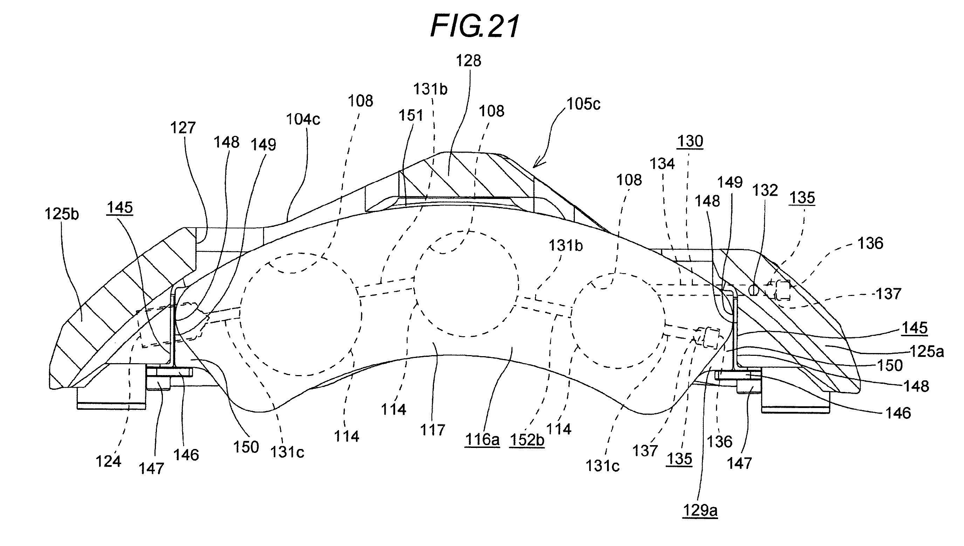

Also, according to the present embodiment, on the two body portions 103c and 104c, there are provided three outer and inner cylinders 107 and 108 apiece, a total of six outer and inner cylinders 107 and 108; and, into these cylinders 107 and 108, there are fitted outer pistons 113, 113 and inner pistons 114, 114 (Fig. 21) in such a manner that they are liquid-tight and can be shifted in the axial direction of the rotor 102. Here, in the illustrated embodiment, the inside diameters of the respective cylinders 107 and 108 increase as they approach the other connecting portion 125b which provides the upper side in a state where the caliper 105c is mounted on the vehicle.

Also, in the peripheral direction central portion of an opening 127 formed outside in the diameter direction of the caliper 105c between the two body portions 103c and 104c, there is provided a reinforcing rib 128 in such a manner that it extends between and over the two body portions 103c and 104c. Also, on the inside of the caliper 105c, there are supported inner and outer pads 116a (only the inner pad 116a is shown in Fig. 21, but the illustration of the outer pad is omitted) in such a manner that they can be shifted in the axial direction of the rotor 102. For this purpose, at four positions of the inside diameter side surfaces (in Figs. 15, 17, 18 and 21, the lower surfaces; in Fig. 16, the back side surfaces; and, in Fig. 19, the front side surfaces) of the respective connecting portions 125a and 125b which are spaced apart from each other in the axial direction of the rotor 102, that is, at a total of eight positions, there are respectively formed screw holes (not shown) in the height direction (in Figs. 15, 17, 18 and 21, in the vertical direction; and in Figs. 16 and 19, in the front and back direction) of the caliper 105c. And, as shown in Fig. 21, bolts 147 and 147 are threadedly engaged with two sets of screw holes (each set including two screw holes of the above-mentioned screw holes spaced from each other only in the axial direction of the rotor 102) and tighten such sets of screw holes: that is, using these bolts 147 and 147, first receiving plates 145, 145 and second receiving plates 146, 146 are respectively connected and fixed to the inside diameter side surface of the caliper 105c. Specifically, the first receiving plates 145 and 145 are each made of a metal plate such as a stainless steel plate so as to have an L-shaped section. Also, the second receiving plates 146 and 146 are each made of a high rigid metal plate so as to have a flat plate shape. And, after the male screw portions of the bolts 147 and 147 are inserted into penetration holes (not shown) formed in the first and second receiving plates 145 and 146, two such holes apiece, the male screw portions are threadedly engaged with and tightened on the screw holes, whereby the respective receiving plates 145, 146 are connected and fixed to such portions of the inside diameter side surfaces of the respective connecting portions 125a and 125b as are spaced from each other in the axial direction of the rotor 2, two portions apiece. In this state, the outside surfaces of receiving side wall portions 148, 148 in the height direction of the caliper 105c, which constitute the first receiving plates 145, 145, are respectively in contact with the inside surfaces of the respective connecting portions 125a and 125b (such surfaces of the connecting portions 125a and 125b as are opposed to each other). Also, the peripheral direction one end portions of the respective second receiving plates 146 and 146 are projected in the peripheral direction from the inside surfaces of the first receiving plates 145 and 145. And, the diameter direction outside surfaces (in Fig. 21, the upper side surfaces) of the portions projecting in the peripheral direction of the second receiving plates 145 and 145 cooperate together with the inside surfaces of the receiving side wall portions 148 and 148 of the first receiving plates 145 and 145 in constituting securing portions 149 and 149 each having an L-shaped section.

And, the peripheral direction two end portions of the inner and outer pads 116a are respectively engaged with the securing portions 149 and 149 in such a manner that they can be shifted in the axial direction of the rotor 102. That is, each of the pads 116a can be formed by attaching a lining 117 to one side of a pressure plate 129a. And, projecting portions 150 and 150 provided on the peripheral direction two end portions of the pressure plates 129a are secured to the securing portions 149 and 149 respectively. Also, on the peripheral direction central portions of the outer peripheries of the pressure plates 129a, there are provided second projecting portions 151 respectively projecting outwardly in the radial direction and, at the same time, the outer peripheral edges of the projecting portions 151 and the radial direction inside surfaces of the reinforcing ribs 128 are opposed to each other with a slight radial direction clearance between them. Owing to this structure, the pads 116a are respectively supported in such a manner that they can be shifted in the axial direction of the rotor 102 with respect to the caliper 105c. Also, in a braking operation or in a similar operation, when the pads 116a behave, the second projecting portions 128 touch the radial direction inside surfaces of the reinforcing ribs 128 to thereby stabilize the behaviors of the pads 116a.

On the other hand, according to this structure, pressure oil can be fed to and discharged from the cylinders 107, 108 respectively provided on the caliper 105c. And, inside the outer and inner body portions 103c, 104c and one connecting portion 125a of the paired connecting portions 125a and 125b, there is formed an oil passage 130 (Fig. 19); and, owing to this oil passage 130, of the above-mentioned cylinders 107, 108, the cylinders 107 and 108, which are situated on one connecting portion 125a side, are allowed to communicate with each other. The oil passage 130 includes a linear-shaped oil hole 132 (first linear-shaped oil hole 132) as well as second and third linear-shaped oil holes 133 and 134 respectively formed in the peripheral direction one end portion (in Figs. 15 to 17, 19 and 22, the right end portion; and, in Fig. 18, the left end portion) of the caliper 105c including the above-mentioned one connecting portion 125a. Of these oil holes, the linear-shaped oil hole 132 is disposed parallel to the axial direction of the rotor 102. Also, the substantial length L₃₂ (Fig. 19) of the linear-shaped oil hole 132 between its connecting portions to the second and third linear-shaped oil holes 133 and 134 is set equal to or larger than the width W₂₇ (Fig. 19) of the opening 127 formed on the outside in the radial direction between the two body portions 103c and 104c (L₃₂ ≥ W₂₇).

Also, the second and third linear-shaped oil holes 133 and 134 are respectively connected to the two ends of the linear-shaped oil hole 132 in such a manner that, as they go away from the linear-shaped oil hole 132, they are inclined with respect to the linear-shaped oil hole 132 in a direction to approach the other connecting portion 125b in the peripheral direction of the rotor 102. And, as shown in Fig. 19, when the caliper 105c is viewed in the radial direction of the rotor 102, the second and third linear-shaped oil holes 133 and 134 are respectively connected to the two ends of the linear-shaped oil hole 132 in the form of "V". Also, the linear-shaped oil hole 132, second and third linear-shaped oil holes 133 and 134 are respectively situated on the same virtual plane perpendicular to the height direction (in Figs. 15, 17, 18 and 22, in the vertical direction; and, in Figs. 16 and 19, in the front and back direction) of the caliper 105c.

Also, the linear-shaped oil hole 132 is disposed on the opening 127 side (in Fig. 19, on the left side) in the peripheral direction of the rotor 102 of the peripheral direction one end portion of the caliper 105c including the above-mentioned one connecting portion 125a. In other words, when the whole length of the above-mentioned one connecting portion 125a in the peripheral direction is expressed as L₁ (Fig. 19), the length L₂ of this one connecting portion 125a from the side surface thereof on the opening 127 side to the linear-shaped oil hole 132 is set less than L₁ /2 (L₂ < L₁ /2).

The linear-shaped oil hole 132, second and third linear-shaped oil holes 133 and 134 are respectively formed directly by making holes in the caliper 105c and, to produce these oil holes 132 to 134, no pipe is inserted in the caliper 105c. Since the oil holes 132 to 134 are formed according to such hole drilling operation, at least one-side ends of the oil holes 132 to 134 are opened in the outer surface of the caliper 105c just after they are worked. Therefore, according to the present embodiment, each of the one-end openings of the oil holes 132 to134 are closed by such a closing unit 135 as shown in Fig. 20. This closing unit 135 includes a columnar shaft member 136 and a ball 137. Specifically, the shaft member 136 includes a male screw portion 138 formed in the outer peripheral surface thereof and a straight-line-shaped securing groove 139 formed in the base end face (in Fig. 20, in the lower end face) thereof. Also, each of the one-end openings of the oil holes 132 to134 includes a large diameter portion 140 having a larger inside diameter than the remaining portions and a seat surface 141 having a partially spherical shape. And, in such portion of the inner peripheral surface of the large diameter portion 140 as is near to the opening end, there is formed a female screw portion 142. To close the one-end openings of the oil holes 132 to134 using the thus structured closing unit 135, in a state where the ball 137 is inserted into the inside of the large diameter portion 140, the male screw portion 138 of the shaft member 136 is threadedly engaged with the female screw portion 142 and, with a minus driver being engaged into the securing groove 139, the male screw portion 138 is firmly tightened onto the female screw portion 142. Thus, the leading end face (in Fig. 20, the upper end face) of the shaft member 136 is pressed against the ball 137 and the outer surface of the ball 137 is pressed against the seat surface 141. In a state where the shaft member 136 is connected to the one-end openings of the oil holes 132 to134 in this manner, these one-end openings can be liquid-tightly closed.

Also, the outer and inner body portions 103c and 104c further include outer side and inner side two oil passages 152a and 152b which are respectively different from the oil passage 130. The outer side and inner side oil passages 152a and 152b respectively include: oil holes 131a for allowing the outer cylinders 107 and 107 to communicate with each other, and oil holes 131b for allowing the inner cylinders 108 and 108 to communicate with each other; and, oil holes 131c and 131c respectively formed in such portions of the caliper 105c as are near to the peripheral direction two ends of the caliper 105c. And, a pair of bleeder screws 124 (Fig. 21) are connected to the caliper 105c peripheral direction other side surfaces (in Figs. 15, 16 and 19, the left side surfaces) of the inner and outer body portions 103c and 104c, while the above-mentioned side surfaces provide the upper end faces of the caliper 105c in a state where the caliper 105c is mounted on the vehicle. And, these bleeder screws 124 are used to close such one-end openings (serving as the upper ends) of the oil holes 131c and 131c formed in the outer and inner body portions 103c and 104c as are situated nearest to the upper end of the caliper 105c in a state where it is mounted on the vehicle. Also, the other end portion openings (which are disposed on the opposite side to the bleeder screws 124) of the oil holes 131c and 131c to be situated nearest to the lower end portion of the caliper 105c in a state where the caliper 105c is mounted on the vehicle are each closed by a closing unit 135 (Fig. 21) similar to the closing unit 135 shown in Fig. 20. The end portions of the oil holes 131a, 131b and 131c (except for the oil hole 131c existing in the right end portion in Fig. 21), which provide the lower ends thereof in a state where the caliper 105c are mounted on the vehicle, are opened in the portions of the respective cylinders 107 and 108 that provide the upper-most ends of these cylinders 107 and 108 in such caliper 105c mounted state. Also, the other end of a feed/discharge port 143 (Figs. 17 and 19), one end of which is opened in such portion of the inner body 104c that is near to the central portion in the peripheral direction of the inner body 104c, is allowed to communicate with the middle portion of the oil hole 131b formed in the inner body portion 104c. In a state where the caliper 105c is mounted on the vehicle, the end portion of a brake hose is connected to the feed/discharge port 143, whereby pressure oil can be fed to and discharged from the respective cylinders 107 and 108 using this brake hose. Also, according to the invention, of the paired connecting portions 125a and 125b of the caliper 105c, in the other connecting portion 125b, there is not formed an oil passage which allows the outer cylinder 107 and inner cylinder 108 to communicate with each other.

In braking, the linings 117 of the outer and inner pads 116a supported on the caliper 105c are pressed by the pistons 113 and 114 against the two side surfaces of the rotor 102 for braking.

In the opposed piston type disc brake according to the present embodiment structured in the above-mentioned manner, the oil passage 130 formed in the inside of the caliper 105c includes the linear-shaped oil hole 132 which is extends parallel to the axial direction of the rotor 102 and has the length L₃₂ (≥ W₂₇) equal to or larger than the width W₂₇ of the opening 127 formed on the outside in the diameter direction between the two body portions 103c and 104c. Therefore, differently from a structure, for example, the second example of the conventional structure shown in Fig. 30 in which an oil passage existing in the portion extending over the outer periphery of the rotor 2 is inclined with respect to the axial direction of the rotor 102, the length of the oil passage extending over the outer periphery of the rotor 102 can be reduced. Thus, in spite of the fact that the temperature of the portion extending over the outer periphery of the rotor 102 rises in braking, an increase in the temperature of the pressure oil flowing through the oil passage 130 existing in such portion can be prevented sufficiently.

Further, according to the present embodiment, the whole length of the oil passages 130, 152a and 152b existing within the caliper 105c can also be reduced. That is, in the second example of the conventional structure shown in Fig. 30, as schematically shown in Fig. 23(A), the oil passage 9 includes inclined portions 10 and 10 respectively inclined with respect to the axial direction (in Fig. 23 (A), in the vertical direction) of the rotor 2 and a liquid sealing seal 11 formed in the connecting portion between the inclined portions 10 and 10. Therefore, of the oil passage 9, the portion thereof existing near to the axial direction central portion of the rotor 2 is greatly distant from the opening portion 27a. Thus, the whole length (Lₐ + L_{b}) of the oil passage 9 existing in the peripheral direction one end portion of the caliper 5a becomes large. On the other hand, in such a structure according to the present embodiment as schematically shown in Fig. 23(B), of the oil passage 130, the portion thereof existing in the peripheral direction one end portion of the caliper 105c is constituted by the linear-shaped oil hole 132 extending parallel to the axial direction of the rotor 102 and the other two (second and third) linear-shaped oil holes 133 and 134 respectively connected to the linear-shaped oil hole 132 in such a manner that they are inclined with respect to the linear-shaped oil hole 132. Therefore, the whole of these oil holes 132 to 134 can be made to approach the inner peripheral edge of the opening 127, and the whole length (L_{A} + L_{B} L_{C}) of these oil holes 132 to 134 can be made shorter than the combined length (Lₐ + L_{b}) of the inclined portions 10 and 10 of the structure shown in Fig. 23 (A) {(L_{A} + L_{B} Lc) < (Lₐ + L_{b})}.

In this manner, in the present embodiment which can reduce the length of the whole of the oil passages 130, 152a and 152b existing within the caliper 105c, the ratio of the amount of pressure oil remaining within the caliper 105c to the whole amount of pressure oil including pressure oil existing within and outside the caliper 105c can be reduced. Owing to this, in spite of an increase in the temperature of the caliper 105c in braking, an increase in the temperature of the pressure oil can be prevented effectively. That is, since the surface area of the whole of the oil passages 130, 152a and 152b existing within the caliper 105c can be reduced, the amount of heat to be transmitted from the caliper 105c to the pressure oil can be reduced, thereby being able to prevent an increase in the temperature of the pressure oil more effectively.

Also, the reduced amount of the pressure oil remaining within the caliper 105c can also reduce the amount of the air mixed into the pressure oil, thereby being able to more effectively prevent generation of a vapor lock phenomenon at high temperatures. Further, the amount of compression of the pressure oil in braking can be reduced and also the difference between the times respectively necessary to generate pressure on the inner and outer sides can be reduced sufficiently, the response of the braking to the pressing-down of a brake pedal can be enhanced further.

Further, according to the present embodiment, of the oil passage 130 formed in the portion, which includes one connecting portion 125a of the paired connecting portions 125a and 125b and provides the lower side of the caliper 105c in a state where the caliper 105c is mounted on the vehicle, to the two ends of the linear-shaped oil hole 132, there are connected the second and third linear-shaped oil holes 133 and 134 respectively. Also, the second and third linear-shaped oil holes 133 and 134 are formed in such a manner that, as they part away from the linear-shaped oil hole 132, they are inclined with respect to the linear-shaped oil hole 132 in a direction to approach the other connecting portion 125b which provides the upper side of the caliper 105c in a state where the caliper 105c is mounted on the vehicle. Therefore, differently from the third example of the conventional structure shown in Figs. 31 and 32, when the oil passages 130, 152a and 152b formed within the caliper 105c are filled with brake oil, it is possible to reduce sufficiently the generation of a state in which the air collects or remains in a portion of the caliper 105c; and also, even when the air collects or remains in a portion of the caliper 105c, the number of times of air bleeding can be reduced, thereby being able to facilitate the removal of such air collection. For example, even when the air mixes into the second and third linear-shaped oil holes 133 and 134, such air can be discharged easily through the bleeder screw 124 to be situated upward in a state where the caliper 105c is mounted on the vehicle. Also, since the length of the linear-shaped oil hole 132 situated in the horizontal direction is sufficiently smaller than the distance between the paired oil passages 152a and 152b respectively situated on the inner and outer sides, the air mixed into the linear-shaped oil hole 132 can also be pushed out easily into the second and third linear-shaped oil holes 133 and 134 and thus such air can be discharged easily through these second and third linear-shaped oil holes 133 and 134. This can reduce the time and labor necessary for the operation to charge the brake oil and also can facilitate the operation to replace the brake oil.

Also, according to the present embodiment, the oil passage 130 includes the second and third linear-shaped oil holes 133 and 134 respectively so connected to the two ends of the linear-shaped oil hole 132 that, as they part away from the linear-shaped oil hole 132, they are inclined with respect to the linear-shaped oil hole 132 in a direction to approach the other connecting portion 125b; and also, the linear-shaped oil hole 132, second and third linear-shaped oil holes 133 and 134 are respectively situated on the same virtual plane perpendicular to the height direction of the caliper 105c. Owing to this structure, the total amount of the pressure oil remaining within the caliper 105c can be reduced further and also an increase in the temperature of the pressure oil in braking can be prevented more effectively.

Also, since the oil passage 130 includes the linear-shaped oil 132, second and third linear-shaped oil holes 133 and 134, by making holes in the caliper 105c, these oil holes 132 to 134 can be formed easily. This eliminates the need to insert a pipe into the inside of the caliper 105c, which makes it possible to reduce the number of parts and the weight of the caliper 105c. Further, in a state where the caliper 105c is held by a jig in such a manner that the height direction of the caliper 105c coincides with the vertical direction, while moving the caliper 105c in the horizontal direction or rotating it in the rotation direction about the vertical axis thereof (rotating it on a horizontal plane), the linear-shaped oil 132, second and third linear-shaped oil holes 133 and 134 can be worked easily. Also, in this working operation, while the position of a working tool such as a drill or a reamer is kept as it is, simply by moving the caliper 105c in the horizontal direction, for example, moving it in a linear direction on the horizontal plane or rotating it on the horizontal plane, all of the oil holes 132 to 134 can be worked. Owing to this, the structure of the whole of a working apparatus on the caliper 105c side can be simplified to a structure which does not have a function to move the caliper 105c in the vertical direction, thereby being able to reduce the cost necessary for working the oil holes.

Further, according to the present embodiment, the linear-shaped oil hole 1.32 is formed in such portion of the peripheral direction one end portion of the caliper 105c including the above-mentioned one connecting portion 125a as exists near to the opening 127 in the peripheral direction of the rotor 102. This can reduce further the length of the whole of the oil passages 130, 152a and 152b respectively existing within the caliper 105c, thereby being able to reduce further the total amount of the pressure oil remaining in the caliper 105c. This can prevent an increase in the temperature of the pressure oil in braking more effectively.

Here, according to the present embodiment, in order to support the outer and inner pads 116a on the caliper 105c, the first and second receiving plates 145 and 146 are connected and fixed to the caliper 105c, and the peripheral direction two end portions of the respective pads 116a are engaged with the securing portions 149 and 149 structured by the partial portions of these receiving plates 145 and 146. However, the invention is not limited to such structure but, as the support structure for supporting the pads 116a on the caliper 105c, there can also be employed various structures including conventionally known structures. For example, at positions sandwiching the reinforcing rib 128 of the caliper 105c from both sides in the peripheral direction, there are supported a pair of pad pins in such a manner that they extend over the opening 127 in the axial direction of the rotor 102 and, at the same time, the middle portions of the pad pins can be slidably inserted into penetration holes respectively formed in the partial portions of the pressure plates 129a of the respective pads 116a.
Also, the invention is not limited to the structure in which the outer cylinders 107 and 107 as well as the inner cylinders 108 and 108 are allowed to communicate with each other using the oil holes 131a and 131b formed separately from each other. For example, the outer cylinders 107 and 107 as well as the inner cylinders 108 and 108 can also be made to communicate with each other respectively using a single linear-shaped oil hole.

### <Tenth Embodiment>

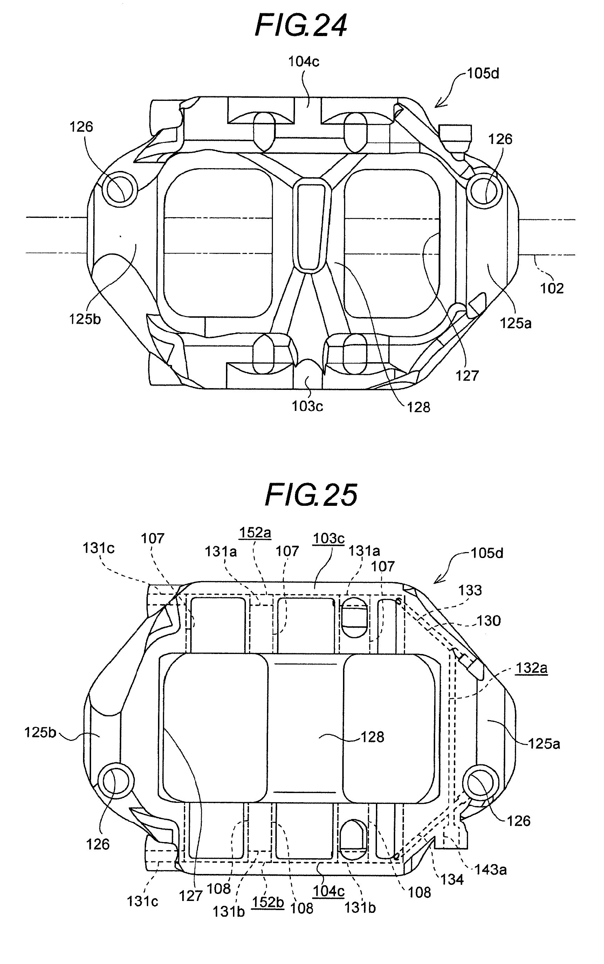

Next, Figs. 24 and 25 respectively show a tenth embodiment according to the invention. In an opposed piston type disc brake according to the present embodiment, in the peripheral direction (in Figs. 24 and 25, the right and left direction) of an inner bodyportion 104c, there is not formed a feed/discharge port for supplying pressure oil into a caliper 105d and discharging it therefrom but, instead, the one end (in Fig. 25, the lower end) opening of a linear-shaped oil hole 132a (first linear-shaped oil hole), which is formed in one connecting portion 125a in such a manner to extend parallel to the axial direction (in Figs. 24 and 25, the vertical direction) of a rotor 102, is used as a feed/discharge port 143a. Owing to this structure, to this one end opening, there can be freely connected the end portion of a brake hose.
The remaining structures and operations of the present embodiment are similar to those of the above-mentioned ninth embodiment. Therefore, the equivalent parts of the present embodiment to the ninth embodiment are given the same designations and thus the duplicate description and illustration thereof are omitted here.

### <Eleventh Embodiment>

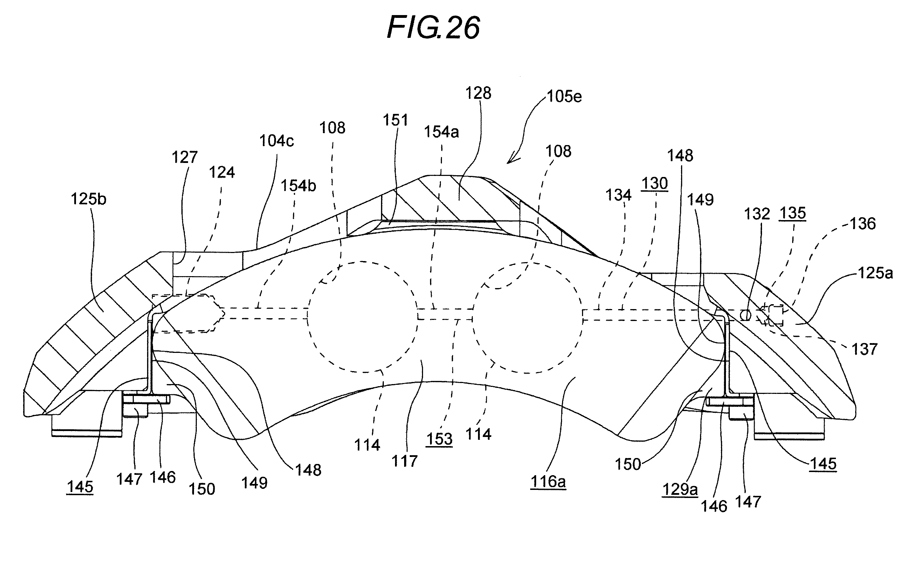

Next, Fig. 26 shows an eleventh embodiment according to the invention. In an opposed piston type disc brake according to the present embodiment, in an outer body portion 103c (see Figs. 15, 16, 18 and 19) and an inner body portion 104c, there are provided outer cylinders 107 (see Figs. 18 and 19) and inner cylinders 108, 108 respectively two apiece, a total of four cylinders. And, into these respective cylinders 107 and 108, there are inserted outer pistons 113, 113 (see Fig. 30) and inner pistons 114, 114 in such a manner that they are liquid-tight and can be shifted in the axial direction of a rotor. Also, in the outer and inner body portions 103c and 104c, there are formed outer side and inner side oil passages 153 (only the inner side oil passage 153 is shown but the illustration of the outer side passage is omitted). Each of the oil passages 153 includes a first oil hole 154a for allowing communication between the outer cylinders 103c as well as between the inner cylinders 104c, and a second oil hole 154b formed near to the other connecting portion 125b. The first and second oil holes formed in the outer body portion 103c as well as the first and second oil holes 154a and 154b formed in the inner body portion 104c are situated on the same virtual straight line respectively; and, in working them, using a working tool such as a drill or a reamer, the first and second oil holes 154a and 154b are worked simultaneously on the outer body portion 103c side and inner body portion 104c side respectively. And, the center axes of the respective cylinders 107 and 108 are set perpendicular to the virtual straight line including the first and second oil holes on the outer body portion 103c and the virtual straight line including the first and second oil holes 154a and 154b, respectively.

Also, the oil holes 154a and 154b are respectively situated on the same virtual plane which is perpendicular to the height direction (in Fig. 26, in the vertical direction) of a caliper 105e and includes a linear-shaped oil hole 132, a second linear-shaped oil hole 133 (see Figs. 19 and 20) and a third linear-shaped oil hole 134 respectively constituting an oil passage 130 formed near to one connecting portion 125a. Also, the bleeder screws 124 are respectively used to close the one end openings (which serve as the outer ends) of the second oil holes 154b which are situated nearest to the upper end of the caliper 105e in a state where the caliper 105e is mounted on the vehicle and constitute the outer side and inner side oil passages 153.

According to the structure of the present embodiment structured in the above-mentioned manner, in a state where the caliper 105e is set on a jig, without moving the caliper 105e in the height direction thereof, by moving the caliper 105e in the horizontal direction or rotating it in the horizontal direction, the linear-shaped oil hole 132, second linear-shaped oil hole 133 and third linear-shaped oil hole 134 as well as the first and second oil holes 154a and 154b can be worked easily. Also, in the working operation, while the position of the working tool is kept as it is, simply moving the caliper 105e in the horizontal direction, all of the oil holes 132 to 134, 154a and 154b can be worked. Therefore, the structure of such working apparatus on the caliper 105e side as can work all of the oil holes 132 to 134, 154a and 154b can be simplified further, thereby being able to reduce further the costs necessary for working the oil holes.
The remaining structures and operations of the present embodiment are similar to those of the above-mentioned ninth embodiment shown in Figs. 15 to 22. Therefore, the equivalent parts of the present embodiment to the ninth embodiment are given the same designations and thus the duplicate description and illustration thereof are omitted here.

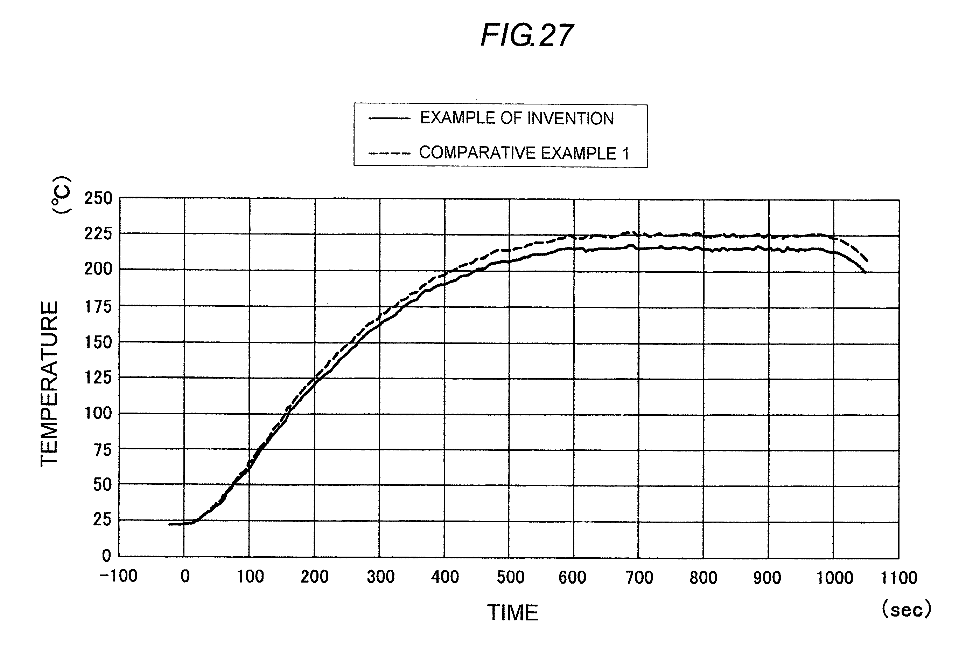

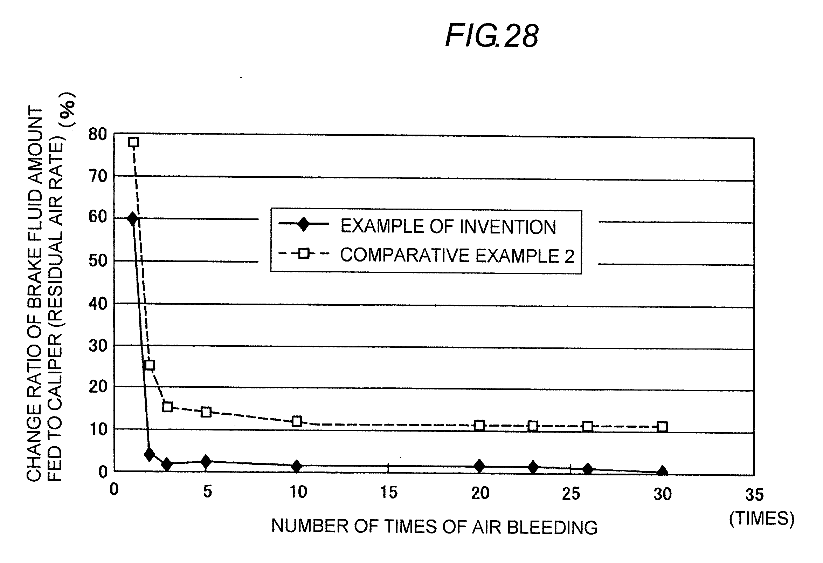

Next, description will be given below of the results of first and second tests conducted to confirm the effects of the invention by the inventors of the present invention with reference to Figs. 27 and 28. Firstly, the first test was conducted in order to confirm the effect that the invention can reduce an increase in the temperature of the pressure oil. In this test, there were used: a comparative example 1 which, as in the second example of the conventional structure shown in Fig. 30, contains a long oil passage 9 existing in such portion as extends over the outer periphery of the rotor 2 and including a pair of inclined portions 10, 10; and, the embodiment of the invention having a structure according to the ninth embodiment shown in Figs. 15 to 22. And, while the same dynamo simulation was conducted on the comparative example 1 and the example of the invention, the temperatures of the pressure oil of the outer body portions 3d and 103c (brake liquid temperatures) were measured. In this test, as these temperatures, the temperatures in the vicinities of the bleeder screws 24 and 124 (see Figs. 21 and 31) provided in a state where they respectively close the end portions of the oil holes 23 and 131c on the inner side were measured. Also, in the present test, when the temperatures of the outer pads were measured at the same time, the temperatures of the outer pads in the example of the invention and comparative example 1 were found almost equal to each other. This made it possible to confirm that the conditions in the temperature measuring time are the same and the precision of the temperature measurement is good. Fig. 27 shows the results of the first test conducted in this manner. As can be clearly seen from the results of the first test shown in Fig. 27, after elapse of a given time, the example of the invention could reduce the temperature of the pressure oil on the outer side about 5 to 10°C, when compared with the comparison example 1. The reason why the example of the invention could reduce the temperature of the pressure oil in this manner when compared with the comparative example 1 is that the invention has employed the following structures (1) and (2).
(1) The linear-shaped oil hole 132, which is formed in such portion of the caliper 105c including one connecting portion 125a as provides the lower side of the caliper 105c in a state where the caliper 105c is mounted on the vehicle, is set to extend parallel to the axial direction of the rotor 102; and, to the two ends of the linear-shaped oil hole 132, there are connected the second and third linear-shaped oil holes 133 and 134 which, as they part away from the linear-shaped oil hole 132, are respectively inclined in a direction to approach the other connecting portion 125b with respect to the peripheral direction of the rotor 102.
(2) The linear-shaped oil hole 132 is formed in such portion of one end portion in the peripheral direction of the caliper 105c including the above-mentioned one connecting portion 125a as is near to the opening with respect to this peripheral direction.

Next, description will be given below of the second test the results of which are shown in Fig. 28. The second test was conducted in order to confirm the effect that the invention can enhance the air bleeding performance. Also, the second test was conducted using: a comparative example 2 having a structure, like the third example of the conventional structure shown in Figs. 31 and 32, in which the oil hole 20b formed in the portion including the intermediate rib 19 and two oil holes 20a and 20c respectively connected to the two sides of the oil hole 20b are situated in the horizontal direction in a state where the caliper is mounted on the vehicle; and, the example of the invention having the structure according to the ninth embodiment shown in Figs. 15 to 22. And, using the comparative example 2 and the example of the invention, there were obtained the change ratios of the amounts of brake oil fed to the calipers 5b and 105c, which correspond to the number of times of air bleeding. For this purpose, firstly, the bleeder screws 24, 124 (Figs. 21 and 31), inner pistons 14, 114 (Fig. 21), outer pistons 13, 113 (see Fig. 30) and piston seals (not shown) are respectively removed from the calipers 5b, 105c. Then, the whole of the calipers 5b, 105c is immersed in the brake fluid and, within the brake oil, the above-removed parts are mounted into the calipers 5b, 105c. In a state where the oil passages 130, 152a and 152b within the calipers 5b, 105c are filled with the brake oil, a given level of oil pressure is applied to the brake oil through the feed/discharge port 143. In this state, there is obtained the amount of the brake oil to be fed to the calipers 5b, 105c, and the thus obtained brake oil amount is used as the reference amount.

Also, in the example of the invention and comparative example 2, in a state where they are mounted on the vehicle, the paired bleeder screws 24, 124 respectively on the inner and outer sides are operated once apiece, and the air bleeding operation is carried out once. And, the change ratio of the amount of the brake oil to be fed to the calipers 5b, 105c when a given level of oil pressure is applied to the brake oil in each air bleeding operation to the reference amount is obtained. The more the change ratio is, the more the air remains within the calipers 5b, 105c. Therefore, the change ratio corresponds to the rate of the residual air within the calipers 5b, 105c (residual air rate). In other words, this means that, as the residual air rate approaches zero, the residual air hardly exists within the calipers 5b, 105c.

Fig. 28 shows the results of the second test in which, while bleeding the air, the residual air rate was measured in this manner. As can be seen clearly from the results of the second test shown in Fig. 28, the example of the invention, when compared with the comparative example 2, can reduce the residual air more with the reduced number of times of air bleeding; and, by increasing the number of times of air bleeding, the example of the invention can remove the residual air almost completely. On the other hand, in the comparative example 2, even when the number of times of air bleeding is increased, the residual air rate cannot be reduced down to 10% or less. The reason why the example of the invention can enhance the air bleeding performance is that the invention employs the above-mentioned (1) structure.

### [Description of Reference Numerals and Signs]

- 1:: Disc brake
- 2:: Rotor
- 3, 3a,: 3b:Outer body portion
- 4, 4a,4b:: Inner body portion
- 5, 5a,5b, 5c:: Caliper
- 7:: Outer cylinder
- 8:: Inner cylinder
- 12:: Feed/discharge port
- 15:: Outer pad
- 16, 16a:: Inner pad
- 17:: Lining
- 18a,: 18b: Connecting portion
- 19:: Intermediate rib
- 20a,20b, 20c:: Linear-shaped oil hole
- 21:: Oil passage
- 22:: Second linear-shaped oil hole
- 23:: Third linear-shaped oil hole
- 24:: Bleeder screw
- 25:: High pressure accumulator
- 26:: Gas intake port
- 27:: Sealing plug
- 28:: Case
- 29:: Plate
- 30:: Container
- 31:: Diaphragm
- 32:: First recessed portion
- 33:: High pressure chamber

- 34:: Second recessed portion
- 35:: Small diameter portion
- 36:: Large diameter portion
- 37:: Tapered surface
- 38:: Female screw portion
- 39:: Steel ball
- 40:: Screw member
- 41:: Pressing portion
- 42:: Securing hole
- 43:: Small diameter portion
- 44:: Large diameter portion
- 45:: Tapered surface
- 46:: Female screw portion
- 47:: Screw member
- 48:: Partial sphere member
- 49, 49a:: Pressing portion
- 50:: Securing hole
- 51:: Steel ball
- 52:: Round-rod-shaped blank member
- 53:: Ball header
- 54:: Metal mold
- 55:: Spherical blank member
- 56:: Disc
- 57:: Steel ball grinding machine
- 58:: Burrs
- 59, 59a,59b:: Pressure receiving portion
- 60:: Hemispherical surface portion
- 61:: Male screw portion
- 62:: Second partial sphere member
- 63, 63a:: Partial spherical surface portion
- 64:: Third partial sphere member
- 65, 65a,65b:: Shaft member
- 66, 66a:: Projecting portion
- 67:: Main body portion
- 68:: Pressing portion
- 69:: Pillar portion

- 70:: Penetration hole
- 71a,71b:: Connecting portion
- 72:: Mounting hole
- 73:: Inner piston
- 74:: Opening
- 75:: Reinforcing rib
- 76:: Oil passage
- 77:: First linear-shaped oil hole
- 78:: Second linear-shaped oil hole
- 79:: Third linear-shaped oil hole
- 80:: Outer side oil passage
- 81:: Inner side oil passage
- 82a to 82c:: Oil hole
- 83:: Bleeder screw
- 84:: Feed/discharge port
- 85:: First receiving plate
- 86:: Second receiving plate
- 87:: Support portion
- 88:: Cylindrical projecting portion
- 101:: Disc brake
- 102:: Rotor
- 103c:: Outer body portion
- 104c:: Inner body portion
- 105c, 105d, 105e:: Caliper
- 106a, 106b:: Pipe
- 107:: Outer cylinder
- 108:: Inner cylinder
- 109:: Oil passage
- 110:: Inclined portion
- 111:: Liquid sealing seal
- 112:: Feed/discharge port
- 113:: Outer piston
- 114:: Inner piston
- 115:: Outer pad
- 116, 116a:: Inner pad
- 117:: Lining
- 118a, 118b:: Connecting portion
- 119:: Intermediate rib
- 120a, 120b, 120c:: Linear-shaped oil hole
- 121:: Oil passage
- 122:: Second linear-shaped oil hole
- 123:: Third linear-shaped oil hole
- 124:: Bleeder screw
- 125a, 125b:: Connecting portion
- 126:: Mounting hole
- 127,: 127a:Opening
- 128:: Reinforcing rib
- 129, 129a:: Pressure plate
- 130:: Oil passage
- 131a, 131b, 131c:: Oil hole
- 132, 132a:: Linear-shaped oil hole (First linear-shaped oil hole)
- 133:: Second linear-shaped oil hole
- 134:: Third linear-shaped oil hole
- 135:: Closing unit
- 136:: Shaft member
- 137:: Ball
- 138:: Male screw portion
- 139:: Securing groove
- 140:: Large diameter portion
- 141:: Seat surface
- 142:: Female screw portion
- 143, 143a:: Feed/discharge port
- 144:: Wheel
- 145:: First receiving plate
- 146:: Second receiving plate
- 147:: Bolt
- 148:: Receiving side wall portion
- 149:: Securing portion
- 150:: Projecting portion
- 151:: Second projecting portion
- 152a:: Outer side oil passage
- 152b:: Inner side oil passage
- 153:: Inner side oil passage
- 154a:: First oil hole
- 154b:: Second oil hole

## Claims

1. An oil hole sealing plug structure comprising:
a large diameter portion and a small diameter portion respectively formed in an oil hole; and
a plug provided on an inside of the large diameter portion,
wherein one end face of the plug is pressed against a seal surface formed in a continuous portion between the large diameter portion and the small diameter portion to thereby liquid-tightly close a portion of the oil hole,
a pressing member is fixed to the inside of the large diameter portion, and
a pressing portion formed in one end face of the pressing member is pressed against a plane-shaped pressure receiving portion formed in the other end face of the plug.

2. The oil hole sealing plug structure according to Claim 1, wherein an outer surface of the plug includes a partial spherical surface portion composed of a portion of a sphere and said plane-shaped pressure receiving portion.

3. The oil hole sealing plug structure according to Claim 1 or 2, wherein the pressing member is a screw member, and a male screw portion formed in the screw member is threadedly engaged with and firmly tightened onto a female portion formed in the large diameter portion to thereby press said pressing portion formed in the screw member against the plane-shaped pressure receiving portion formed in the plug.

4. An oil hole sealing plug structure comprising:
a large diameter portion and a small diameter portion respectively formed in an oil hole; and
a plug provided on an inside of the large diameter portion,
wherein one end face of the plug is pressed against a seal surface formed in a continuous portion between the large diameter portion and the small diameter portion to thereby liquid-tightly close a portion of the oil hole, and
a male screw portion formed in an outer peripheral surface of the plug is threadedly engaged with and firmly tightened onto a female screw portion formed in the large diameter portion to thereby fix the plug to the inside of the large diameter portion.

5. The oil hole sealing plug structure as set form in any one of Claims 1 to 4, wherein the plug includes a curved surface portion formed in a portion thereof that is opposed to the seal surface, and
the curved surface portion has a shape which can be obtained when a curved line is rotated about a center axis of the plug.
